# EUROPEAN PATENT APPLICATION

(11) **EP 4 408 045 A1**
(43) Date of publication of application: **31.07.2024**
(21) Application number: 22871497.8
(22) Date of filing: 17.06.2022
(51) Int. Cl.: H04W 8/20, H04W 36/04, H04W 4/70

(54) **INFORMATION SENDING METHOD AND APPARATUS**

(30) Priority: 24.09.2021 CN 202111123330
(71) Applicant: Datang Mobile Communications Equipment Co., Ltd., Beijing 100085 (CN)
(72) Inventor: ZHANG, Mingzhu, Beijing 100085 (CN); YAN, Nan, Beijing 100085 (CN); YAN, Xue, Beijing 100085 (CN)
(74) Representative: Studio Torta S.p.A.
(86) International application number: PCT/CN2022/099575
(87) International publication number: WO 2023/045436

(57) **Abstract**

This application provides an information transmitting method and an information transmitting apparatus, which relate to the field of communications technology. The method of this application is applied in establishing, by a remote UE, a communication with a network-side device through a relay UE. The method includes: obtaining first relevant information generated during a communication process; and transmitting the first relevant information to a network-side device. The first relevant information includes one or more of the following: information of the relay UE; information of the remote UE; identification information of a serving cell; time information; measurement information; cause information; type information corresponding to the communication process; a condition for triggering a successful handover report.

## Description

### CROSS-REFERENCE TO RELATED APPLICATION

This application claims priority to Chinese Patent Application No. 202111123330.6 filed in China on September 24, 2021, the disclosure of which is incorporated by reference herein in its entirety.

### TECHNICAL FIELD

The present application relates to the field of communications technology, in particular to an information transmitting method and apparatus.

### BACKGROUND

With the development of communications technology, in order to achieve extended coverage, multi-hop communications has become the focus of current researches. Multi-hop communications refers to that a terminal device transmits information to a network device through one or more relay devices forwarding the information.

However, mobile robustness optimisation of self-optimisation network (SON) or minimal drive test (MDT) in related technologies is mainly directed to single-hop networks. In a multi-hop communications network, if a terminal collects information according to the information collection method of the single-hop network, the base station will not be able to identify the multi-hop network after receiving a report from the terminal, and thus cannot realize the optimisation of the multi-hop network.

### SUMMARY

This disclosure is to provide an information transmitting method and apparatuses, so as to achieve mobile robustness optimisation in a scenario of a multi-hop network, and help a network to better optimize the multi-hop network.

In order to achieve the above objective, an embodiment of this application provides an information transmitting method, which is applied in establishing, by a remote UE, a communication with a network-side device through a relay UE. The method includes:
obtaining first relevant information generated during a communication process; and transmitting the first relevant information to the network-side device, where the first relevant information includes one or more of the following:
information of the relay UE;
information of the remote UE;
identification information of a serving cell;
time information;
measurement information;
cause information;
type information corresponding to the communication process;
a condition for triggering a successful handover report.

Optionally, the communication process includes one or more of the following:
a connection establishment procedure;
a connection resumption procedure;
a radio link failure procedure;
a handover procedure.

Optionally, the information of the relay UE includes: identification information of the relay UE; and/or, a correspondence between the identification information and a specified event; and/or, location information of the relay UE;
where the specified event includes at least one of the following events:
a connection establishment;
a radio link failure (RLF) being detected;
a handover failure (HOF) being detected;
a handover;
reverting back to a connection after a connection failure or a re-establishment failure;
a re-establishment after a connection failure;
attempting to establish a PCS connection after an RLF occurs to the remote UE, where the RLF includes a PCS RLF or a Uu RLF;
attempting to establish a PCS connection after an HOF occurs to the remote UE.

Optionally, the information of the remote UE includes one or more of the following:
identification information of the remote UE, including identification information of a remote UE that establishes a PCS connection with the relay UE;
location information of the remote UE;
a quantity of remote UEs that establish a PCS connection with the relay UE.

Optionally, the time information includes one or more of the following:
a duration from when a PCS connection is established to when the communication process occurs;
a duration from a handover related time moment to when an RLF occurs;
a duration elapsing since an RLF is detected;
a duration from when an RLF occurs to when a PCS connection is established;
a duration elapsing since an HOF is detected;
a duration from when an HOF occurs to when a PCS connection is established;
a duration from when a PCS connection is established to when a radio resource control (RRC) connected state is entered;
a duration from when an RLF occurs to when an RRC connected state is entered;
a duration from when an HOF occurs to when an RRC connected state is entered;
where the RLF includes a PCS RLF or a Uu RLF.

Optionally, the measurement information includes one or more of the following:
a PCS measurement result of the remote UE;
a measurement result of a PCS connection between the remote UE and the relay UE that establishes the PCS connection with the remote UE;
a Uu link measurement result of the remote UE;
a PCS measurement result of the relay UE;
a measurement result of a PCS connection between the relay UE and the remote UE that establishes the PCS connection with the relay UE;
a Uu link measurement result of the relay UE.

Optionally, the cause information includes one or more of the following:
a cause of a connection establishment failure, where a connection establishment includes that the relay UE assists the remote UE in establishing a connection;
a cause of a connection resumption failure;
a cause of a radio link failure, where a radio link includes a PCS link or a Uu link;
a cause of a connection establishment, where the cause of the connection establishment is to establish a connection for the remote UE.

Optionally, in case that the radio link is the PCS link, the cause of the radio link failure includes one or more of the following:
a T400 timer expires;
the number of transmissions of a sidelink radio link control (RLC) entity is greater than or equal to a first transmission number;
the number of consecutive hybrid automatic repeat request (HARQ) discontinuous transmissions (DTXs) of a medium access control (MAC) entity is greater than or equal to a second transmission number;
an integrity check of a sidelink signaling radio bearer associated with a sidelink packet data convergence protocol (PDCP) entity fails.

Optionally, the cause of the connection establishment failure includes one or more of the following:
the relay UE is in a connected state, and a connection establishment of the remote UE fails;
the relay UE is in an idle or inactive state, a connection establishment of the relay UE fails, and a connection establishment of the remote UE fails.

Optionally, the cause of the connection resumption failure includes one or more of the following:
the relay UE is in a connected state, and a connection resumption of the remote UE fails;
the relay UE is in an idle or inactive state, a connection resumption of the relay UE fails, and a connection resumption of the remote UE fails.

Optionally, the type information corresponding to the communication process includes one or more of the following:
a type of a connection failure, where the type of the connection failure includes one or more of: an RLF of the remote UE, an HOF of the remote UE;
a handover type, where the handover type includes one or more of: a handover from a direct connection to a PCS connection, a handover from a PCS connection to a direct connection, and a handover from one PCS connection to another PCS connection;
a type of a handover failure, where the type of the handover failure includes one or more of: a failure of a handover from a direct connection to a PCS connection, a failure of a handover from a PCS connection to a direct connection, and a failure of a handover from one PCS connection to another PCS connection.

Optionally, the condition for triggering the successful handover report includes one or more of the following:
T400 timer is greater than a timer threshold and does not expire;
the number of transmissions of a sidelink RLC entity is greater than or equal to a first transmission threshold, and less than a first transmission number;
the number of consecutive HARQ DTXs of an MAC entity is greater than or equal to a second transmission threshold, and less than a second transmission number.

Optionally, the identification information of the serving cell includes one or more of the following:
identification information of a source cell in a last handover;
identification information of a serving cell of a remote UE before a last handover in case that a connection before the handover is a PCS connection;
identification information of a serving cell of a remote UE that detects an RLF;
identification information of a serving cell of a remote UE that detects an HOF;
identification information of a serving cell of a remote UE that reverts back to a connection after a connection failure;
identification information of a serving cell of a remote UE that reverts back to a connection after a re-establishment failure.

Optionally, the identification information includes one or more of the following:
cell-radio network temporary identifier (C-RNTI);
an identifier of layer 2.

In order to achieve the above objective, an embodiment of this application further provides an information transmitting apparatus, including a memory, a transceiver and a processor, where the memory is configured to store program instructions; the transceiver is configured to transmit and receive data under control of the processor; and the processor is configured to read the program instructions; the transceiver is configured to:
obtain first relevant information generated during a communication process; and transmit the first relevant information to a network-side device, where the communication process is a communication established by a remote UE with the network-side device through a relay UE; where the first relevant information includes one or more of the following:
information of the relay UE;
information of the remote UE;
identification information of a serving cell;
time information;
measurement information;
cause information;
type information corresponding to the communication process;
a condition for triggering a successful handover report.

Optionally, the communication process includes one or more of the following:
a connection establishment procedure;
a connection resumption procedure;
a radio link failure procedure;
a handover procedure.

Optionally, the information of the relay UE includes: identification information of the relay UE; and/or, a correspondence between the identification information and a specified event; and/or, location information of the relay UE; where the specified event includes at least one of the following events:
a connection establishment;
a radio link failure (RLF) being detected;
a handover failure (HOF) being detected;
a handover;
reverting back to a connection after a connection failure or a re-establishment failure;
a re-establishment after a connection failure;
attempting to establish a PCS connection after an RLF occurs to the remote UE, where the RLF includes a PCS RLF or a Uu RLF;
attempting to establish a PCS connection after an HOF occurs to the remote UE.

Optionally, the information of the remote UE includes one or more of the following:
identification information of the remote UE, including identification information of a remote UE that establishes a PCS connection with the relay UE;
location information of the remote UE;
a quantity of remote UEs that establish a PCS connection with the relay UE.

Optionally, the time information includes one or more of the following:
a duration from when a PCS connection is established to when the communication process occurs;
a duration from a handover related time moment to when an RLF occurs;
a duration elapsing since an RLF is detected;
a duration from when an RLF occurs to when a PCS connection is established;
a duration elapsing since an HOF is detected;
a duration from when an HOF occurs to when a PCS connection is established;
a duration from when a PCS connection is established to when a radio resource control (RRC) connected state is entered;
a duration from when an RLF occurs to when an RRC connected state is entered;
a duration from when an HOF occurs to when an RRC connected state is entered;
where the RLF includes a PCS RLF or a Uu RLF.

Optionally, the measurement information includes one or more of the following:
a PCS measurement result of the remote UE;
a measurement result of a PCS connection between the remote UE and the relay UE that establishes the PCS connection with the remote UE;
a Uu link measurement result of the remote UE;
a PCS measurement result of the relay UE;
a measurement result of a PCS connection between the relay UE and the remote UE that establishes the PCS connection with the relay UE;
a Uu link measurement result of the relay UE.

Optionally, the cause information includes one or more of the following:
a cause of a connection establishment failure, where a connection establishment includes that the relay UE assists the remote UE in establishing a connection;
a cause of a connection resumption failure;
a cause of a radio link failure, where a radio link includes a PCS link or a Uu link;
a cause of a connection establishment, where the cause of the connection establishment is to establish a connection for the remote UE.

Optionally, in case that the radio link is the PCS link, the cause of the radio link failure includes one or more of the following:
a T400 timer expires;
the number of transmissions of a sidelink radio link control (RLC) entity is greater than or equal to a first transmission number;
the number of consecutive hybrid automatic repeat request (HARQ) discontinuous transmissions (DTXs) of a medium access control (MAC) entity is greater than or equal to a second transmission number;
an integrity check of a sidelink signaling radio bearer associated with a sidelink packet data convergence protocol (PDCP) entity fails.

Optionally, the cause of the connection establishment failure includes one or more of the following:
the relay UE is in a connected state, and a connection establishment of the remote UE fails;
the relay UE is in an idle or inactive state, a connection establishment of the relay UE fails, and a connection establishment of the remote UE fails.

Optionally, the cause of the connection resumption failure includes one or more of the following:
the relay UE is in a connected state, and a connection resumption of the remote UE fails;
the relay UE is in an idle or inactive state, a connection resumption of the relay UE fails, and a connection resumption of the remote UE fails.

Optionally, the type information corresponding to the communication process includes one or more of the following:
a type of a connection failure, where the type of the connection failure includes one or more of: an RLF of the remote UE, an HOF of the remote UE;
a handover type, where the handover type includes one or more of: a handover from a direct connection to a PCS connection, a handover from a PCS connection to a direct connection, and a handover from one PCS connection to another PCS connection;
a type of a handover failure, where the type of the handover failure includes one or more of: a failure of a handover from a direct connection to a PCS connection, a failure of a handover from a PCS connection to a direct connection, and a failure of a handover from one PCS connection to another PCS connection.

Optionally, the condition for triggering the successful handover report includes one or more of the following:
T400 timer is greater than a timer threshold and does not expire;
the number of transmissions of a sidelink RLC entity is greater than or equal to a first transmission threshold, and less than a first transmission number;
the number of consecutive HARQ DTXs of an MAC entity is greater than or equal to a second transmission threshold, and less than a second transmission number.

Optionally, the identification information of the serving cell includes one or more of the following:
identification information of a source cell in a last handover;
identification information of a serving cell of a remote UE before a last handover in case that a connection before the handover is a PCS connection;
identification information of a serving cell of a remote UE that detects an RLF;
identification information of a serving cell of a remote UE that detects an HOF;
identification information of a serving cell of a remote UE that reverts back to a connection after a connection failure;
identification information of a serving cell of a remote UE that reverts back to a connection after a re-establishment failure.

Optionally, the identification information includes one or more of the following:
cell-radio network temporary identifier (C-RNTI);
an identifier of layer 2.

In order to achieve the above objective, an embodiment of this application further provides an information transmitting apparatus, including: a first transmitting module, configured to obtain first relevant information generated during a communication process; and transmit the first relevant information to a network-side device, where the communication process is a communication established by a remote UE with the network-side device through a relay UE; where the first relevant information includes one or more of the following:
information of the relay UE;
information of the remote UE;
identification information of a serving cell;
time information;
measurement information;
cause information;
type information corresponding to the communication process;
a condition for triggering a successful handover report.

Optionally, the communication process includes one or more of the following:
a connection establishment procedure;
a connection resumption procedure;
a radio link failure procedure;
a handover procedure.

Optionally, the information of the relay UE includes: identification information of the relay UE; and/or, a correspondence between the identification information and a specified event; and/or, location information of the relay UE; where the specified event includes at least one of the following events:
a connection establishment;
a radio link failure (RLF) being detected;
a handover failure (HOF) being detected;
a handover;
reverting back to a connection after a connection failure or a re-establishment failure;
a re-establishment after a connection failure;
attempting to establish a PCS connection after an RLF occurs to the remote UE, where the RLF includes a PCS RLF or a Uu RLF;
attempting to establish a PCS connection after an HOF occurs to the remote UE.

Optionally, the information of the remote UE includes one or more of the following:
identification information of the remote UE, including identification information of a remote UE that establishes a PCS connection with the relay UE;
location information of the remote UE;
a quantity of remote UEs that establish a PCS connection with the relay UE.

Optionally, the time information includes one or more of the following:
a duration from when a PCS connection is established to when the communication process occurs;
a duration from a handover related time moment to when an RLF occurs;
a duration elapsing since an RLF is detected;
a duration from when an RLF occurs to when a PCS connection is established;
a duration elapsing since an HOF is detected;
a duration from when an HOF occurs to when a PCS connection is established;
a duration from when a PCS connection is established to when a radio resource control (RRC) connected state is entered;
a duration from when an RLF occurs to when an RRC connected state is entered;
a duration from when an HOF occurs to when an RRC connected state is entered;
where the RLF includes a PCS RLF or a Uu RLF.

Optionally, the measurement information includes one or more of the following:
a PCS measurement result of the remote UE;
a measurement result of a PCS connection between the remote UE and the relay UE that establishes the PCS connection with the remote UE;
a Uu link measurement result of the remote UE;
a PCS measurement result of the relay UE;
a measurement result of a PCS connection between the relay UE and the remote UE that establishes the PCS connection with the relay UE;
a Uu link measurement result of the relay UE.

Optionally, the cause information includes one or more of the following:
a cause of a connection establishment failure, where a connection establishment includes that the relay UE assists the remote UE in establishing a connection;
a cause of a connection resumption failure;
a cause of a radio link failure, where a radio link includes a PCS link or a Uu link;
a cause of a connection establishment, where the cause of the connection establishment is to establish a connection for the remote UE.

Optionally, in case that the radio link is the PCS link, the cause of the radio link failure includes one or more of the following:
a T400 timer expires;
the number of transmissions of a sidelink radio link control (RLC) entity is greater than or equal to a first transmission number;
the number of consecutive hybrid automatic repeat request (HARQ) discontinuous transmissions (DTXs) of a medium access control (MAC) entity is greater than or equal to a second transmission number;
an integrity check of a sidelink signaling radio bearer associated with a sidelink packet data convergence protocol (PDCP) entity fails.

Optionally, the cause of the connection establishment failure includes one or more of the following:
the relay UE is in a connected state, and a connection establishment of the remote UE fails;
the relay UE is in an idle or inactive state, a connection establishment of the relay UE fails, and a connection establishment of the remote UE fails.

Optionally, the cause of the connection resumption failure includes one or more of the following:
the relay UE is in a connected state, and a connection resumption of the remote UE fails;
the relay UE is in an idle or inactive state, a connection resumption of the relay UE fails, and a connection resumption of the remote UE fails.

Optionally, the type information corresponding to the communication process includes one or more of the following:
a type of a connection failure, where the type of the connection failure includes one or more of: an RLF of the remote UE, an HOF of the remote UE;
a handover type, where the handover type includes one or more of: a handover from a direct connection to a PCS connection, a handover from a PCS connection to a direct connection, and a handover from one PCS connection to another PCS connection;
a type of a handover failure, where the type of the handover failure includes one or more of: a failure of a handover from a direct connection to a PCS connection, a failure of a handover from a PCS connection to a direct connection, and a failure of a handover from one PCS connection to another PCS connection.

Optionally, the condition for triggering the successful handover report includes one or more of the following:
T400 timer is greater than a timer threshold and does not expire;
the number of transmissions of a sidelink RLC entity is greater than or equal to a first transmission threshold, and less than a first transmission number;
the number of consecutive HARQ DTXs of an MAC entity is greater than or equal to a second transmission threshold, and less than a second transmission number.

Optionally, the identification information of the serving cell includes one or more of the following:
identification information of a source cell in a last handover;
identification information of a serving cell of a remote UE before a last handover in case that a connection before the handover is a PCS connection;
identification information of a serving cell of a remote UE that detects an RLF;
identification information of a serving cell of a remote UE that detects an HOF;
identification information of a serving cell of a remote UE that reverts back to a connection after a connection failure;
identification information of a serving cell of a remote UE that reverts back to a connection after a re-establishment failure.

Optionally, the identification information includes one or more of the following:
cell-radio network temporary identifier (C-RNTI);
an identifier of layer 2.

In order to achieve the above objective, an embodiment of this application further provides a processor readable storage medium, where the processor readable storage medium stores program instructions, and the program instructions are configured to cause a processor to perform the transmission processing method performed by a first UE, or a transmission processing method performed by a second UE, or a transmission processing method performed by a network-side device.

In order to achieve the above objective, an embodiment of this application further provides a communication device, where program instructions are stored in the communication device, and the program instructions are configured to cause the communication device to perform the information transmitting method as described above.

An embodiment of this application further provides a computer-readable storage medium, where program instructions are stored in the computer-readable storage medium, and the program instructions are configured to perform the information transmitting method as described above.

An embodiment of this application further provides a computer program product, where program instructions are stored in the computer program product, and the program instructions are configured to perform the information transmitting method as described above.

The above technical solutions of this application have at least the following beneficial effects.

In the above technical solutions of the embodiment of this application, in an application scenario where a remote UE establishes a communication with a network-side device through a relay UE, first relevant information generated during the communication process is obtained, where the first relevant information includes at least one of the following: information of the relay UE, information of the remote UE, identification information of a serving cell, time information, measurement information, cause information, type information corresponding to the communication process, a condition for triggering a successful handover report, and the first relevant information is transmitted to the network-side device. Each of different UEs collects corresponding information according to a relevant operation executed by the UE in the communications, and reports the collected information to the network-side device. Thus, the network-side device can identify performance of a multi-hop network after receiving the first relevant information, and then can perform mobile robustness optimisation of the multi-hop network based on the first relevant information.

### BRIEF DESCRIPTION OF THE DRAWINGS

FIG. 1 is a schematic diagram of communication links from a remote UE, a relay UE to a network;
Fig. 2 is a schematic flowchart of a method according to an embodiment of this application;
FIG. 3 is a first schematic diagram of a scenario according to an embodiment of this application;
Fig. 4 is a second schematic diagram of a scenario according to an embodiment of this application;
Fig. 5 is a third schematic diagram of a scenario according to an embodiment of this application;
FIG. 6 is a fourth schematic diagram of a scenario according to an embodiment of this application;
Fig. 7 is a fifth schematic diagram of a scenario according to an embodiment of this application;
Fig. 8 is a sixth schematic diagram of a scenario according to an embodiment of this application;
FIG. 9 is a schematic flowchart of a method according to another embodiment of this application;
FIG. 10 is a structural block diagram of an apparatus according to an embodiment of this application;
Fig. 11 is a module schematic diagram of an apparatus according to an embodiment of this application;
Fig. 12 is a schematic structural diagram of an apparatus according to an embodiment of this application; and
FIG. 13 is a module block diagram of an apparatus according to an embodiment of this application.

### DETAILED DESCRIPTION

The term "and/or" in embodiments of the present application describes the association relationship of associated objects and indicates that there may be three types of relationships. For example, A and/or B may represent three situations including: A alone, both A and B, and B alone. The character "/" generally indicates that the associated objects are in an "or" relationship.

The term "multiple" used in the embodiments of the present application refers to two or more, and other quantifiers are similar thereto.

In the following, technical solutions in the embodiments of the present application will be described in a clear and thorough manner with reference to the drawings in the embodiments of the present application. Apparently, the described embodiments are merely a part of, rather than all of, the embodiments of the present application. Based on the embodiments of the present application, a person skilled in the art may, without creative effort, obtain other embodiments, all of which shall fall within the scope of the present application.

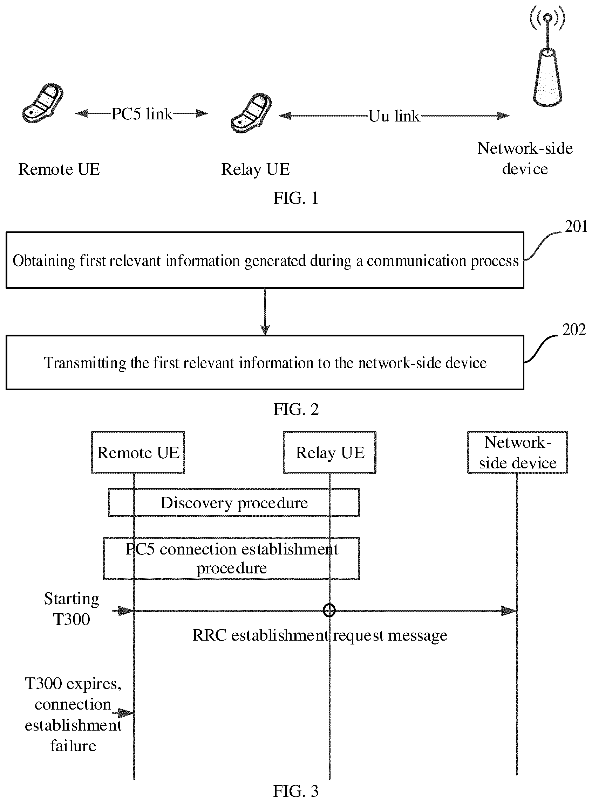

It should be appreciated that a relay node is introduced into a multi-hop network, and the relay node may be a terminal having a relay function, also referred to as a relay UE. A schematic diagram of communication links from a user equipment to a network (UE-to-Network Relay) is shown in FIG. 1. A communication interface between a relay user equipment (relay UE) and a network-side device is a Uu interface, and a communication interface between the relay UE and a remote user equipment (remote UE) is a direct communication interface (for example, PCS interface). Relative to the remote UE, a link between the relay UE and the network-side device may be referred to as a backhaul link (BH). It should be noted that the remote UE shown in FIG. 1 establishes a communication connection with the network-side device through one relay UE. In practical applications, a remote UE may establish a communication connection with a network-side device through multiple relay UEs, where the relay UE close to the network-side device may also be referred to as UE-to-Network terminal; the relay UE close to the remote UE may also be referred to as UE-to-UE terminal. In the embodiments of this application, description is given by exemplarily assuming there are two hops between the remote UE and the network-side device.

As shown in FIG. 1, for the remote UE, in case that a network environment is good, the remote UE may directly establish communication with the network-side device through Uu. In this case, the remote UE may be understood as a normal terminal, and collects various information generated during a communication process and reports the same to the network-side device according to the relevant method (Single-hop network method). However, in the case of a bad network environment, the remote UE needs to establish communication with the network-side device through the relay UE. First, the remote UE needs to establish a connection (this connection will be referred to as PCS connection hereinafter) with the relay UE through a sidelink interface (for example, PCS interface), and then the remote UE needs to collect various information generated during the process of PCS connection establishment and subsequent communication, and records a correspondence between the various information and PCS. Second, the remote UE transmits a message for requesting establishment of communication with the network-side device to the relay UE through the PCS connection, and after transmitting the message, the remote UE records information (including response content of the network-side device forwarded by the relay UE) of interaction generated between the remote UE and the relay UE due to the message, and transmits information recorded at each stage to the network-side device. That is, in the multi-hop network, the remote UE may establish communication with the network-side device directly through Uu, or establish communication with the network-side device through a relay UE based on PC5. The main content researched in the embodiments of this application include all information (especially the information that may reflect the multi-hop feature) generated during the process of establishing communication between the remote UE and the network-side device via the relay UE(s) connected through PC5.

For the relay UE, if the relay UE does not receive, from the remote UE, a message for requesting to establish communication with the network-side device, then the relay UE can act as a normal UE, establish communication with the network-side device in a single-hop network manner, and collect various information generated during the communication process; if the message transmitted by the remote UE requesting to establish communication with the network-side device is received, the relay UE will no longer be an ordinary UE, and passively establishes communication with the network-side device according to the received message, and records various information generated during the communication process, and records various information generated during the process of establishing connection with the remote UE. In this way, after receiving the information transmitted by the remote UE and the relay UE, the network-side device can identify which information is information of the single-hop network and which information is information of the multi-hop network, and then optimizes the multi-hop network according to information related to the multi-hop network. The following uses a two-hop network as an example for illustration.

As shown in FIG. 2, an information transmitting method is provided by an embodiment of this application, which is applied to a communication that is established by a remote UE with a network-side device through a relay UE. The method includes:
step 201, obtaining first relevant information generated during a communication process; and
step 202, transmitting the first relevant information to the network-side device.

The first relevant information includes one or more of the following:
information of the relay UE;
information of the remote UE;
identification information of a serving cell;
time information;
measurement information;
cause information;
type information corresponding to the communication process;
a condition for triggering a successful handover report.

In this way, in an application scenario where a remote UE establishes a communication with a network-side device through a relay UE, first relevant information generated during the communication process is obtained, where the first relevant information includes at least one of the following: information of the relay UE, information of the remote UE, identification information of a serving cell, time information, measurement information, cause information, type information corresponding to the communication process, a condition for triggering a successful handover report, and the first relevant information is transmitted to the network-side device. Each of different UEs collects corresponding information according to a relevant operation executed by the UE in the communications, and records a correspondence between the information and the executed operation. Thus, the network-side device can identify performance of a multi-hop network after receiving the first relevant information, and then can perform mobile robustness optimisation of the multi-hop network based on the first relevant information.

Optionally, the communication process includes one or more of the following:
a connection establishment procedure;
a connection resumption procedure;
a radio link failure procedure;
a handover procedure.

Specifically, the connection establishment procedure may be a successful connection establishment procedure or a failed connection establishment procedure; the connection resumption procedure may be a successful connection resumption procedure or a failed connection resumption procedure; the handover procedure may be a successful handover procedure, or a failed handover procedure.

In the embodiment, the connection establishment procedure of the remote UE in a multi-hop network scenario includes two situations: the first situation is that no radio resource control (RRC) connection is established between the relay UE and the network-side device, and the second situation is that an RRC connection has been established between the relay UE and the network-side device.

In the first situation, after receiving an RRC connection establishment request from the remote UE, a relay UE establishes an RRC connection between the relay UE and the network-side device; after the connection is established, the relay UE forwards the RRC connection establishment request of the remote UE to the network-side device. In this situation, if the establishment of the RRC connection between the relay UE and the network fails, the RRC connection establishment of the remote UE will fail.

In the second situation, the relay UE directly forwards the RRC connection establishment request of the remote UE to assist the remote UE in establishing the RRC connection.

In the embodiment, the connection resumption procedure in the multi-hop network scenario is similar to the connection establishment procedure, which will not be repeated here.

In the embodiment, the radio link failure procedure in the multi-hop network scenario includes two situations. The first situation is that the remote UE detects a PCS RLF, and the second situation is that the relay UE detects a Uu RLF. In the first situation, the remote UE will trigger an RLF after detecting the PCS RLF. In the second situation, the relay UE will transmit Uu RLF indication information to the remote UE to notify the remote UE that a Uu link is abnormal, and the remote UE will trigger an RLF after receiving the indication information.

In an embodiment, the handover procedure in the multi-hop network scenario includes: a handover from a direct connection to a PCS connection between the remote UE and the network-side device, a handover from the PCS connection to the direct connection between the remote UE and the network-side device, and a handover from one PCS connection to another PCS connection between the remote UE and the network-side device (that is, to reselect a relay UE).

Optionally, the information of the relay UE includes: identification information of the relay UE; and/or, a correspondence between the identification information and a specified event; and/or, location information of the relay UE;

The specified event includes at least one of the following events:
a connection establishment;
a radio link failure (RLF) being detected;
a handover failure (HOF) being detected;
a handover;
reverting back to a connection after a connection failure or a re-establishment failure;
a re-establishment after a connection failure;
attempting to establish a PCS connection after the RLF occurs to the remote UE, where the RLF includes a PCS RLF or a Uu RLF;
attempting to establish a PCS connection after the HOF occurs to the remote UE.

Optionally, the information of the remote UE includes one or more of the following:
identification information of the remote UE, including identification information of a remote UE that establishes a PCS connection with the relay UE;
location information of the remote UE;
the quantity of remote UEs that establish a PCS connection with the relay UE.

Optionally, the time information includes one or more of the following:
a duration from when a PCS connection is established to when the communication process occurs;
a duration from a handover related time moment to when an RLF occurs;
a duration elapsing since an RLF is detected;
a duration from when an RLF occurs to when a PCS connection is established;
a duration elapsing since an HOF is detected;
a duration from when an HOF occurs to when a PCS connection is established;
a duration from when a PCS connection is established to when a radio resource control (RRC) connected state is entered;
a duration from when an RLF occurs to when an RRC connected state is entered;
a duration from when an HOF occurs to when an RRC connected state is entered;
where the RLF includes a PCS RLF or a Uu RLF.

Optionally, the measurement information includes one or more of the following:
a PCS measurement result of the remote UE;
a measurement result of a PCS connection between the remote UE and the relay UE that establishes the PCS connection with the remote UE;
a Uu link measurement result of the remote UE;
a PCS measurement result of the relay UE;
a measurement result of a PCS connection between the relay UE and the remote UE that establishes the PCS connection with the relay UE;
a Uu link measurement result of the relay UE.

Optionally, the cause information includes one or more of the following:
a cause of a connection establishment failure, where a connection establishment includes that the relay UE assists the remote UE in establishing a connection;
a cause of a connection resumption failure;
a cause of a radio link failure, where a radio link includes a PCS link or a Uu link;
a cause of a connection establishment, where the cause of the connection establishment is to establish a connection for the remote UE.

Optionally, in case that the radio link is the PCS link, the cause of the radio link failure includes one or more of the following:
a T400 timer expires;
the number of transmissions of a sidelink radio link control (RLC) entity is greater than or equal to a first transmission number;
the number of consecutive hybrid automatic repeat request (HARQ) discontinuous transmissions (DTXs) of a medium access control (MAC) entity is greater than or equal to a second transmission number;
an integrity check of a sidelink signaling radio bearer associated with a sidelink packet data convergence protocol (PDCP) entity fails.

Optionally, the cause of the connection establishment failure includes one or more of the following:
the relay UE is in a connected state, and a connection establishment of the remote UE fails;
the relay UE is in an idle or inactive state, a connection establishment of the relay UE fails, and a connection establishment of the remote UE fails.

Optionally, the cause of the connection resumption failure includes one or more of the following:
the relay UE is in a connected state, and a connection resumption of the remote UE fails;
the relay UE is in an idle or inactive state, a connection resumption of the relay UE fails, and a connection resumption of the remote UE fails.

Optionally, the type information corresponding to the communication process includes one or more of the following:
a type of connection failure, where the type of the connection failure includes one or more of: an RLF of the remote UE, an HOF of the remote UE;
a handover type, where the handover type includes one or more of: a handover from a direct connection to a PCS connection, a handover from a PCS connection to a direct connection, and a handover from one PCS connection to another PCS connection;
a type of a handover failure, where the type of the handover failure includes one or more of: a failure of a handover from a direct connection to a PCS connection, a failure of a handover from a PCS connection to a direct connection, and a failure of a handover from one PCS connection to another PCS connection.

Optionally, the condition for triggering the successful handover report includes one or more of the following:
a T400 timer is greater than a timer threshold and does not expire;
the number of transmissions of a sidelink RLC entity is greater than or equal to a first transmission threshold, and less than a first transmission number;
the number of consecutive HARQ DTXs of an MAC entity is greater than or equal to a second transmission threshold, and less than a second transmission number.

Optionally, the identification information of the serving cell includes one or more of the following:
identification information of a source cell in a last handover;
identification information of a serving cell of a remote UE before a last handover in case that a connection before the handover is a PCS connection;
identification information of a serving cell of a remote UE that detects an RLF;
identification information of a serving cell of a remote UE that detects an HOF;
identification information of a serving cell of a remote UE that reverts back to a connection after a connection failure;
identification information of a serving cell of a remote UE that reverts back to a connection after a re-establishment failure.

Optionally, the identification information includes one or more of the following:
cell-radio network temporary identifier (C-RNTI);
an identifier of layer 2.

It should also be known that, in the embodiments of this application, a remote UE establishes a communication with a network-side device through a relay UE, and both the remote UE and the relay UE may obtain and transmit respective first relevant information generated during the communication process.

Description is provided below by exemplarily assuming that a remote UE (such as a first UE or a remote terminal) obtains the first relevant information.

In the above communication process, device information of the relay UE obtained by a first UE is identification information of a relay UE, and/or, a correspondence between the identification information and the specified event.

In the process of establishing communication between the remote UE and the relay UE, various situations may occur, and these situations are referred to as events here. For different events, in order to indicate an object to that the event occurs, it is necessary to establish the correspondence between an identifier of the object (the object here mainly refers to the relay UE) and the specified event. The event here may include, but not limited to, one or more of: a connection establishment; a radio link failure (RLF) being detected; a handover failure (HOF) being detected; a handover; reverting back to a connection after a connection failure or a re-establishment failure; a re-establishment after a connection failure; attempting to establish a PCS connection after the RLF occurs to the remote UE, where the RLF includes a PCS RLF or a Uu RLF; attempting to establish the PCS connection after the HOF occurs to the remote UE.

For example, the remote UE establishes a connection with a relay UE. The connection establishment here may be already established or to be established. For the event of the connection establishment, the recorded content includes: a correspondence between the connection establishment and the identification information of the relay UE, that is, the identification information of the relay UE for the connection establishment. For another example, the remote UE has detected an RLF, the RLF here includes a PCS RLF and a Uu RLF. If it is a PCS RLF, the remote UE needs to determine a peer end of the PCS link, that is, which UE is the relay UE, and the recorded content is a correspondence between the PCS RLF and the identification information of the relay UE. That is, based on the correspondence, it may be determined that the RLF occurs to the remote UE on a PCS link established between the remote UE and a relay UE corresponding to the information.

Alternatively, in case of a specified event, the remote UE may record a relay UE when the specified event occurs. For example, the relay UE includes: a relay UE in the connection establishment procedure, such as a relay UE that has established a PCS connection with the first UE, or a relay UE that is yet to establish a PCS connection with the first UE; a relay UE that detects an RLF, including a PCS RLF and a Uu RLF; a relay UE that detects an HOF, during a PCS handover procedure or a handover process from direct connection to PCS connection; a source relay UE, that is, the source relay UE in a handover or connection resumption, e.g., a relay UE before the handover if the first UE switches among different relay UEs; a target relay UE, that is, the target relay UE in a handover or connection resumption, e.g., a relay UE serving as a handover target if the first UE switches among different relay UEs; a relay UE to which the remote UE reverts back after a connection failure or a re-establishment failure; a relay UE for a re-establishment after a connection failure; a relay UE with which the remote UE attempts to establish a PCS connection after the RLF occurs to the remote UE; a relay UE with which the remote UE attempts to establish a PCS connection after the HOF occurs to the remote UE.

Any one or more pieces of the above identification information of the relay UE obtained by the first UE are C-RNTI or L2 identity document (ID) corresponding to the relay UE.

Optionally, in addition to the device information of the relay UE, the remote UE may also record its own device information. The device information of the remote UE includes one or more of the following:
identification information of the remote UE;
location information of the remote UE.

The identification information of the remote UE is identification information of the first UE, and includes at least one of C-RNTI or an identifier of layer 2, such as C-RNTI or L2 ID of the first UE. The location information of the remote UE is location information of the first UE.

Optionally, in an embodiment, the time information obtained by the first UE includes one or more of the following:
a duration from when a PCS connection is established to when the communication process occurs;
a duration from a handover related time moment to when an RLF occurs;
a duration elapsing since an RLF is detected;
a duration from when an RLF occurs to when a PCS connection is established;
a duration elapsing since an HOF is detected;
a duration from when an HOF occurs to when a PCS connection is established;
a duration from an establishment of a PCS connection to a time of entering an RRC connected state;
a duration from when an RLF occurs to when an RRC connected state is entered;
a duration from when an HOF occurs to when an RRC connected state is entered;
where the RLF includes a PCS RLF or a Uu RLF.

The PCS connection here may be the last PCS connection. For example, the time information includes the duration from the establishment of the PCS connection to the occurring time of the communication process. In case that the communication process is a handover procedure, the duration may be specifically a duration from a stating moment of the last PCS connection establishment before the handover performed by the first UE to a handover stating moment (such as the moment when a handover configuration is received or the moment when the handover is executed, and the handover includes a handover from a direct connection to a PCS connection, a handover from a PCS connection to a direct connection, and a handover from one PCS connection to another PCS connection), or a duration from an ending moment of the last PCS connection establishment before the handover performed by the remote UE to a handover ending moment.

For the remote UE in the embodiment, the RLF includes a PCS RLF or a Uu RLF, thus the time information includes a duration from when an RLF occurs to when an RRC connected state is entered, that is, a duration from a moment when an RLF of the remote UE is detected (including that the remote UE autonomously detects the PCS RLF, or the relay UE detects the Uu RLF) to a moment when the remote UE enters the RRC connected state. The specific implementation of other durations will not be enumerated here one by one.

In the embodiments, "detected" may also be understood as "occurred".

It should be noted that the handover related time moment may be an initialization moment of the last handover, or may also be an execution moment of the last handover. The duration elapsing since the RLF is detected may be a duration from a moment when the RLF is detected (the remote UE detects the PCS RLF, or the relay UE detects the Uu RLF) to a moment when a first event occurs. The first event may be that the first UE reports time related information to the network-side device, or may be that a configured expiration time for recording time related information is reached, or the like. Similarly, the duration elapsing since the HOF is detected may be a duration from a moment when the HOF is detected to a moment when a second event occurs. The second event may be the same as the first event or other preset events.

Optionally, in an embodiment, the measurement information obtained by the first UE includes one or more of the following:
a PCS measurement result of the remote UE;
a measurement result of a PCS connection between the remote UE and the relay UE that establishes the PCS connection with the remote UE;
a Uu link measurement result of the remote UE.

Here, the Uu link measurement result includes one or more of the following: reference signal received power (RSRP); reference signal received quality (RSRQ); received signal strength indicator (RSSI); signal to interference plus noise ratio (SINR). The PC5 measurement result includes one or more of the following: a measurement result of a sidelink reference signal, a measurement result of a sidelink discovery signal. It should be noted that the sidelink in this application may also be referred to as a direct communication link.

It should also be noted that the PCS measurement result obtained by the first UE includes PCS measurement results between the first UE and one or more UEs that can serve as relay UEs (candidate relay UEs) of the first UE. Of course, the PC5 measurement result of the remote UE includes a PCS measurement result between the first UE and a relay UE that has a PCS connection with the first UE. Considering the mobile robustness optimisation requirements, the reported measurement information may be a measurement result of the PCS connection between the remote UE and a relay UE that has established a PCS connection with the remote UE.

Optionally, in an embodiment, the cause information obtained by the first UE includes one or more of the following:
a cause of a connection establishment failure, where a connection establishment includes that the relay UE assists the remote UE in establishing a connection;
a cause of a connection resumption failure;
a cause of a radio link failure, where a radio link includes a PCS link or a Uu link.

From the connection establishment procedure of the first UE in the above multi-hop network scenario, the cause of the connection failure obtained by the first UE may indicate a specific failure reason.

From the above radio link failure procedure for the first UE in a multi-hop network scenario, it can be known that the radio link failure may be caused by a failure of a PCS radio link, or a failure of a Uu radio link. Therefore, optionally, the cause of the radio link failure includes one or more of the following: a PCS radio link fails; or a Uu radio link fails.

The cause of the failure of the Uu radio link is the same as a cause of a radio link failure between a terminal and a network-side device in a single-hop network, and will not be described here.

Optionally, in case that the radio link is the PCS link, the cause of the radio link failure includes one or more of the following:
a T400 timer expires;
the number of transmissions of a sidelink radio link control (RLC) entity is greater than or equal to a first transmission number;
the number of consecutive hybrid automatic repeat request (HARQ) discontinuous transmissions (DTXs) of a medium access control (MAC) entity is greater than or equal to a second transmission number;
an integrity check of a sidelink signaling radio bearer associated with a sidelink packet data convergence protocol (PDCP) entity fails.

That is to say, when reporting the cause of the radio link failure, the first UE may only report whether the failure is caused by the PCS RLF or the Uu RLF, or in case that the radio link failure is caused by the PCS RLF, the first UE may further report or only report the cause of a PCS RLF, for example, a T400 timer expires.

The T400 timer is a configured PCS timer, and if the T400 timer expires, then a PCS RLF occurs. The first transmission number is a configured maximum transmission number of transmissions by a sidelink RLC entity, and if the number of transmissions of the sidelink RLC entity is greater than or equal to the maximum transmission number, then a PCS RLF occurs. The second transmission number is a configured maximum transmission number of consecutive HARQ DTXs of the MAC entity, and if the number of consecutive HARQ DTXs of the MAC entity is greater than or equal to the maximum transmission number, then a PCS RLF occurs. The sidelink signaling radio bearer associated with the sidelink PDCP entity may be SL-SRB2 or SL-SRB3. If an integrity check of SL-SRB2 or SL-SRB3 associated with the sidelink PDCP entity fails, then a PCS RLF occurs.

It is known from the above contents that the connection establishment procedure of the first UE in a multi-hop network scenario includes two cases, one is that no RRC connection is established between the relay UE and the network, and the other is that an RRC connection has been established between the relay UE and the network. Therefore, optionally, the cause of the connection establishment failure obtained by the first UE includes one or more of the following:
the relay UE is in a connected state, and a connection establishment of the remote UE fails;
the relay UE is in an idle or inactive state, a connection establishment of the relay UE fails, and a connection establishment of the remote UE fails.

That is to say, in the case where the RRC connection has been established between the relay UE and the network, the relay UE has established a Uu connection with a network-side device, the relay UE may directly forward an RRC connection establishment request of the remote UE to assist the remote UE in establishing an RRC connection; so if the connection establishment fails, the cause of the connection establishment failure is that the relay UE is in the connected state, and the connection establishment of the remote UE fails. In the situation where the RRC connection is not established between the relay UE and the network, the relay UE has not yet established a Uu connection with the network-side device, after receiving an RRC connection establishment request from the remote UE, the relay UE first establishes an RRC connection between the relay UE and the network, and forwards the connection establishment request of the remote UE to the network side after the connection is established; so if the relay UE fails to establish the connection with the network side, the cause of the connection establishment failure is that the relay UE is in the idle state or the inactive state, and the connection establishment failure of the relay UE causes the connection establishment of the remote UE to fail.

Moreover, it is known from the above contents that the connection resumption procedure of the first UE in the multi-hop network scenario is similar to the connection establishment procedure, which includes two situations. One is that there is no RRC connection established between the relay UE and the network, and the other is that an RRC connection has been established between the relay UE and the network. Therefore, optionally, the cause of the connection resumption failure obtained by the first UE includes one or more of the following:
the relay UE is in a connected state, and a connection resumption of the remote UE fails;
the relay UE is in an idle or inactive state, a connection resumption of the relay UE fails, and a connection resumption of the remote UE fails.

That is, in the situation where the RRC connection has been established between the relay UE and the network, if a connection resumption fails, the cause of the connection resumption failure is that the relay UE is in the connected state, and the connection resumption of the remote UE fails. In the situation where no RRC connection is established between the relay UE and the network, if a connection resumption fails, the cause of the connection resumption failure is that the relay UE is in the idle state or the inactive state, and the connection resumption failure of the relay UE causes the connection resumption of the remote UE to fail.

Optionally, in an embodiment, the type information corresponding to the communication process obtained by the first UE includes one or more of the following:
a type of a connection failure, where the type of the connection failure includes one or more of: an RLF of the remote UE, an HOF of the remote UE;
a handover type, where the handover type includes one or more of: a handover from a direct connection to a PCS connection, a handover from a PCS connection to a direct connection, and a handover from one PCS connection to another PCS connection;
a type of a handover failure, where the type of the handover failure includes one or more of: a failure of a handover from a direct connection to a PCS connection, a failure of a handover from a PCS connection to a direct connection, and a failure of a handover from one PCS connection to another PCS connection.

In this way, the first UE indicate whether the cause of the connection failure of the first UE in the connected state is the RLF of the remote UE or the HOF of the remote UE, by reporting the type of the connection failure. The first UE can also indicate the cause of the handover failure by reporting the type of the handover failure. The first UE indicates a specific handover implemented by the first UE in the handover procedure in the multi-hop network scenario by reporting the handover type.

In addition, a successful handover report (SHR) is a report used for informing the network-side device that although the handover is successful, there is a threshold issue in the handover procedure. In an embodiment, considering the multi-hop network scenario, optionally, the condition, obtained by the first UE, for triggering the SHR includes one or more of the following:
a T400 timer is greater than a timer threshold and does not expire;
the number of transmissions of a sidelink RLC entity is greater than or equal to a first transmission threshold, and less than a first transmission number;
the number of consecutive HARQ DTXs of an MAC entity is greater than or equal to a second transmission threshold, and less than a second transmission number.

Here, the timer threshold is configured for the T400 timer, the first transmission threshold is configured for the transmissions of the sidelink RLC entity, and the second transmission threshold is configured for the consecutive HARQ DTXs of the MAC entity. The first transmission number is a configured maximum transmission number of transmissions of the sidelink RLC entity; the second transmission number is a configured maximum transmission number of consecutive HARQ DTX transmissions of the MAC entity.

In case that the T400 timer is greater than the timer threshold and has not expired, the SHR is triggered. If the number of transmissions of the sidelink RLC entity is greater than or equal to the first transmission threshold, but less than the first transmission number, the SHR is triggered. If the number of consecutive HARQ DTXs of the MAC entity is greater than or equal to the second transmission threshold, but less than the second transmission number, the SHR is triggered.

Optionally, in an embodiment, the identification information of the serving cell obtained by the first UE includes one or more of the following:
identification information of a source cell in a last handover;
identification information of a serving cell of a remote UE before a last handover in case that a connection before the handover is a PCS connection;
identification information of a serving cell of a remote UE that detects an RLF;
identification information of a serving cell of a remote UE that detects an HOF;
identification information of a serving cell of a remote UE that reverts back to a connection after a connection failure;
identification information of a serving cell of a remote UE that reverts back to a connection after a re-establishment failure.

The first UE obtains respective identification information of its serving cell for different communication processes.

In the embodiment, the last handover is relative to a moment when the first UE transmits the first relevant information to the network-side device, and is the last one of the handovers before this moment. In this way, if the identification information of the serving cell reported by the first UE includes the identification information of the source cell in the last handover, the identification information may be the identification information of the serving cell of the first UE before the last handover, and the last handover may be the handover from the direct connection to the PCS connection, the handover from the PCS connection to the direct connection, and the handover from one PCS connection to another PCS connection of the first UE. If the identification information of the serving cell reported by the first UE includes the identification information of a serving cell of the remote UE before the last handover in case that a connection before the handover is a PCS connection, the identification information may be identification information of a serving cell of the first UE before the last handover before moment A (a moment when the first UE transmits relevant information to the network-side device), where the last handover is a handover from a PCS connection to a direct connection, or a handover from one PCS connection to another PCS connection. If the identification information of the serving cell reported by the first UE includes identification information of a serving cell of a remote UE that has detected an RLF, the identification information may be an identifier of a serving cell of the first UE when the first UE autonomously detects an RLF or when the relay UE detects an RLF. If the identification information of the serving cell reported by the first UE includes identification information of a serving cell of the remote UE that has detected an HOF, the identification information may be an identifier of a serving cell of the first UE when the first UE detects an HOF. If the identification information of the serving cell reported by the first UE includes identification information of a serving cell of a remote UE that reverts back to a connection after a connection failure, the identification information may be an identifier of a serving cell of the first UE when the first UE reverts back to the connection with an old relay UE because a connection between the first UE and a new relay UE fails. If the identification information of the serving cell reported by the first UE includes identification information of a serving cell of a remote UE that reverts back to a connection after a re-establishment failure, the identification information may be an identifier of a serving cell of the first UE when the first UE reverts back to the connection with the relay UE.

Optionally, in an embodiment, the first UE performs step 201, that is, after the first UE enters the connected state, the first UE first reports, in a first dedicated signaling, indication information that the first UE has first relevant information; in response to the indication information, the network side device can request, in a second dedicated signaling, the first UE to report the first relevant information; the first UE reports the recorded first relevant information in a third dedicated signaling according to the request of the network-side device.

The first dedicated signaling may be RRC Setup Complete, or RRC Reconfiguration Complete, or RRC Re-establishment Complete, or RRC Resume Complete. The second dedicated signaling may be RRC Reconfiguration, or UE Information Request. The third dedicated signaling may be UE Information Response.

In another aspect, description is given by exemplarily assuming that the relay UE (such as a second UE or a relay terminal) obtains the first relevant information.

Different from the first UE, in this embodiment, the connection establishment procedure of the relay UE in a multi-hop network scenario includes two situations, one is that the relay UE has data to be transmitted, and autonomously establishes an RRC connection with the network-side device; the other is that the relay UE first establishes an RRC connection between the relay UE and the network-side device after receiving an RRC connection establishment request from the remote UE or an RRC connection establishment request of the remote UE forwarded by another relay UE, and after the connection is established, forwards the connection establishment request of the remote UE to the network side.

In the embodiment, the connection resumption procedure of the relay UE in the multi-hop network scenario is similar to the connection establishment procedure of the relay UE, and will not be repeated here.

For the relay UE, in an embodiment, the radio link failure procedure in a multi-hop network scenario includes two cases, the first case is that the relay UE detects a PCS RLF, and the second case is that the relay UE detects a Uu RLF. In the first case, communication between the relay UE that has detected the PCS RLF and the network-side device has to go through one or more relay UEs, the relay UE detects a PCS RLF of a PCS connection between the relay UE and another relay UE. In the second case, the relay UE that detects the Uu RLF is directly connected to the network-side device, and when detecting the Uu RLF, the relay UE will transmit Uu RLF indication information to the remote UE, to notify the remote UE that a Uu link is abnormal.

For the relay UE, in an embodiment, the handover procedure in a multi-hop network scenario includes: a handover of the relay UE among different cells, a handover of the relay UE among different network-side devices. The handover procedure also includes: a handover from a direct connection to a PCS connection, a handover from a PCS connection to a direct connection, a handover from one PCS connection to another PCS connection between the relay UE and the network-side device (that is, to reselect the relay UE). In this case, the communication between the relay UE and the network-side device still needs to go through one or more relay UEs.

Optionally, the device information of the relay UE obtained by the second UE includes one or more of the following: identification information of the relay UE; location information of the relay UE.

The identification information of the relay UE may be identification information of the second UE, and may also be identification information of another relay UEs that establishes a PCS connection with the second UE. The location information of the relay UE is the location information of the second UE.

Optionally, the device information of the remote UE obtained by the second UE includes one or more of the following:
identification information of remote UEs that establish PCS connections with the relay UE;
the quantity of remote UEs that establish PCS connections with the relay UE.

Considering that the second UE may establish a PCS connection with one or more UEs, the identification information of the remote UEs that establish the PCS connections with the relay UE refers to identification information of remote UEs establishing PCS connections with the second UE. The quantity of the remote UEs that establish the PCS connections with the relay UE refers to the quantity of remote UEs establishing PCS connections with the second UE.

The identification information of the remote UE in the PCS connection with the second UE is the C-RNTI or L2 ID corresponding to the remote UE. Of course, the identification information of the relay UE also includes at least one of C-RNTI or an identifier of layer 2, such as C-RNTI or L2 ID corresponding to the relay UE.

Optionally, the second UE obtains the time information. The time information here is similar to the type of the time information obtained by the remote UE.

For example, for the duration from the establishment of the PCS connection to the occurring time of the communication process, if the communication process is a handover procedure, the duration may be specifically a duration from a stating moment of the last PCS connection establishment before the second UE performs a handover to a handover stating moment (such as the moment when a handover configuration is received or the handover is executed, and the handover may be a handover from a direct connection to a PCS connection, a handover from a PCS connection to a direct connection, and a handover from one PCS connection to another PCS connection between the second UE and the network-side device, or a handover among different cells of the second UE, or a handover among different network-side devices of the second UE), or a duration from an ending moment of the last PCS connection establishment before the handover to a handover ending moment.

For the relay UE in the embodiment, the RLF includes a PCS RLF or a Uu RLF, thus the time information includes a duration from when an RLF occurs to when an RRC connected state is entered. The time information may be a duration from a moment when a Uu RLF of the relay UE occurs (or is detected) to a moment when the relay UE enters the RRC connected state, or a duration from a moment when a PCS RLF of the relay UE occurs (or is detected) to a moment when the relay UE enters the RRC connected state, which will not be enumerated here one by one.

It should be noted that, similar to the implementation with respect to the first UE, the handover related time moment is an initialization moment of the last handover, or an execution moment of the last handover. The duration elapsing since the RLF is detected is a duration from a moment when the RLF is detected by the relay UE to a moment when a first event occurs. The first event may be that the second UE reports time related information to the network-side device, or may be that a configured expiration time for recording time related information is reached, or the like. Similarly, the duration elapsing since the HOF is detected may be a duration from a moment when the HOF is detected to a moment when a second event occurs. The second event may be the same as the first event or other preset events.

Optionally, the measurement information obtained by the second UE includes one or more of the following:
a PCS measurement result of the relay UE;
a PCS measurement result between the relay UE and a remote UE that establishes a PCS connection with the relay UE;
a Uu link measurement result of the relay UE.

The PCS measurement result obtained by the second UE is a PCS measurement result between the second UE and one or more UEs that can serve as a remote UE (candidate UE) of the second UE. Of course, the PC5 measurement result of the relay UE includes the PCS measurement result between the second UE and a remote UE in the PCS connection with the second UE. Considering the mobile robustness optimisation requirements, the reported measurement related information may only be a measurement result of the PCS connection between the relay UE and the remote UE in the PCS connection with the relay UE. The Uu link measurement result of the relay UE is similar to the Uu link measurement result of the remote UE, including one or more of RSRP, RSRQ, RSSI, or SINR. The PCS measurement result includes a measurement result of a sidelink reference signal and/or a measurement result of a sidelink discovery signal.

Optionally, the cause information includes one or more of the following:
a cause of a connection establishment, where the cause of the connection establishment is to establish a connection for a remote UE;
a cause of a radio link failure, where a radio link includes a PCS link or a Uu link.

The second UE can report the cause of the connection establishment, which indicates that a Uu connection between the second UE and the network-side device is established for the remote UE, that is, the establishment of the connection by the relay UE during the connection establishment procedure is triggered by the remote UE.

In addition, from the above radio link failure procedure for the second UE in a multi-hop network scenario, it can be known that the radio link failure may be caused by a failure of a PCS radio link or a failure of a Uu radio link. Therefore, optionally, the cause of the radio link failure includes one or more of the following: the PCS radio link fails; or the radio link fails.

In other words, the radio link failure in the multi-hop network scenario is caused by a PCS RLF or a Uu RLF.

The cause of the failure of the Uu radio link is the same as a cause of a radio link failure between a terminal and a network-side device in a single-hop network, and will not be described here. For a PCS RLF, optionally, in case that the radio link is the PCS link, similar to those obtained by the first UE, the cause of the radio link failure obtained by the second UE may include one or more of the following:
a T400 timer expires;
the number of transmissions of a RLC entity is greater than or equal to a first transmission number;
the number of consecutive HARQ DTXs of a MAC entity is greater than or equal to a second transmission number;
an integrity check of a sidelink signaling radio bearer associated with a sidelink PDCP entity fails.

The T400 timer is a configured RLF PC5 timer, and if the T400 timer expires, then a PCS RLF occurs. The first transmission number is a configured maximum transmission number of transmissions by a sidelink RLC entity, and if the number of transmissions of the sidelink RLC entity is greater than or equal to the maximum transmission number, then a PCS RLF occurs. The second transmission number is a configured maximum transmission number of consecutive HARQ DTXs of the MAC entity, and if the number of consecutive HARQ DTXs of the MAC entity is greater than or equal to the maximum transmission number, then a PCS RLF occurs. The sidelink signaling radio bearer associated with the sidelink PDCP entity may be SL-SRB2 or SL-SRB3. If an integrity check of SL-SRB2 or SL-SRB3 associated with the sidelink PDCP entity fails, then a PCS RLF occurs.

Optionally, in an embodiment, the type information corresponding to the communication process obtained by the second UE includes one or more of the following:
a type of a connection failure, where the type of the connection failure includes one or more of: an RLF of the remote UE, an HOF of the remote UE;
a handover type, where the handover type includes one or more of: a handover from a direct connection to a PCS connection, a handover from a PCS connection to a direct connection, and a handover from one PCS connection to another PCS connection;
a type of a handover failure, where the type of the handover failure includes one or more of: a failure of a handover from a direct connection to a PCS connection, a failure of a handover from a PCS connection to a direct connection, and a failure of a handover from one PCS connection to another PCS connection.

In this way, the second UE indicate whether the cause of the connection failure of the second UE in the connected state is the RLF of the relay UE or the HOF of the relay UE, by reporting the type of the connection failure. The second UE can also indicate the cause of the handover failure by reporting the type of the handover failure. The second UE indicates a specific handover implemented in the handover procedure in a multi-hop network scenario by reporting the handover type.

It should be understood that the second UE may be directly connected to the network-side device, so the reported handover type may also include cell handover and/or network-side device handover. Similarly, the type of the handover failure may also include a failure of a cell handover and/or a failure of a network-side device handover.

In addition, the condition for triggering the successful handover report obtained by the second UE is the same as that obtained by the first UE, and may also include one or more of the following:
a T400 timer is greater than a timer threshold and does not expire;
the number of transmissions of a sidelink RLC entity is greater than or equal to a first transmission threshold, and less than a first transmission number;
the number of consecutive HARQ DTXs of an MAC entity is greater than or equal to a second transmission threshold, and less than a second transmission number.

Optionally, the second UE obtains identification information of a serving cell of the relay UE, thus, the identification information of the serving cell includes one or more of the following:
identification information of a source cell in a last handover;
identification information of a serving cell of a relay UE before a last handover in case that a connection before the handover is a PCS connection;
identification information of a serving cell of a relay UE that detects an RLF;
identification information of a serving cell of a relay UE that detects an HOF;
identification information of a serving cell of a relay UE that reverts back to a connection after a connection failure;
identification information of a serving cell of a relay UE that reverts back to a connection after a re-establishment failure.

The second UE obtains respective identification information of a serving cell of the second UE for different communication processes.

In the embodiment, the last handover is relative to a moment when the second UE transmits the relevant information to the network-side device, and is the last one of the handovers before this moment. In this way, if the identification information of the serving cell reported by the second UE includes the identification information of the source cell in the last handover, the identification information may be the identification information of the serving cell of the second UE before the last handover, and the last handover may be the handover from the direct connection to the PCS connection, the handover from the PCS connection to the direct connection, and the handover from one PCS connection to the other PCS connection between the second UE and the network-side device. If the identification information of the serving cell reported by the second UE includes the identification information of the serving cell of the relay UE before the last handover in case that a connection before the handover is a PCS connection, the identification information may be identification information of a serving cell of the relay UE before a last handover before the moment B (a moment when the second UE transmits relevant information to the network-side device), where the last handover is a handover from a PCS connection to a direct connection, or a handover from one PCS connection to another PCS connection. If the identification information of the serving cell reported by the second UE includes identification information of a serving cell of a relay UE that has detected an RLF, the identification information may be an identifier of a serving cell of the second UE when the second UE detects an RLF. If the identification information of the serving cell reported by the second UE includes identification information of a serving cell of the relay UE that has detected an HOF, the identification information may be an identifier of a serving cell of the second UE when detecting an HOF. If the identification information of the serving cell reported by the second UE includes identification information of a serving cell of a relay UE that reverts back to a connection after a connection failure, the identification information may be an identifier of a serving cell of the second UE when the second UE reverts back to the connection with the old relay UE because a connection between the second UE and a new relay UE fails. If the identification information of the serving cell reported by the second UE includes identification information of a serving cell of a relay UE that reverts back to a connection after a re-establishment failure, the identification information may be an identifier of a serving cell of the second UE when the second UE reverts back to the connection with the old network-side device because a connection between the second UE and a new network-side device fails.

Optionally, in an embodiment, the second UE performs step 201, that is, after entering a connected state, the second UE first reports, in a first dedicated signaling, indication information of second relevant information of the second UE; in response to the indication information, the network-side device can request, in a second dedicated signaling, the second UE to report the second relevant information; the second UE reports the second relevant information in a third dedicated signaling according to the request of the network-side device.

The first dedicated signaling may be RRC Setup Complete, or RRC Reconfiguration Complete, or RRC Re-establishment Complete, or RRC Resume Complete. The second dedicated signaling may be RRC Reconfiguration or UE Information Request. The third dedicated signaling may be UE Information Response.

Applications of the method in the above embodiments of this application will be described below in combination with specific scenarios:

### Scenario 1: failure of connection establishment

As shown in FIG. 3, a remote UE establishes a PCS connection with a relay UE through a discovery procedure and a PCS connection establishment procedure. The remote UE in an RRC_IDLE state triggers the connection establishment procedure, and the remote UE starts timer T300. The relay UE is in a connected state (RRC_CONNETED state), and forwards an RRC establishment request message from the remote UE to the network-side device. The timer T300 expires, the remote UE has not received a connection establishment message from the network side, and the connection establishment of the remote UE fails. Therefore, it may be understood that the cause of the connection establishment failure of the remote UE in this scenario is that the relay UE is in a connected state, and a connection establishment of the remote UE fails.

In this way, in addition to information included in a connection establishment failure (CEF) report in the related art, information recorded by the remote UE when the connection establishment failure is detected includes the following information:
relevant information of the relay UE: identification information (L2-ID or C-RNTI) of the relay UE for the connection establishment;
relevant information of the remote UE: location information of the remote UE, identification information (L2-ID or C-RNTI) of the remote UE;
identification information of a serving cell: identification information of the serving cell for the connection establishment;
time related information: a duration from when the relay UE is connected to when the connection establishment failure occurs;
measurement related information: a PCS measurement result between the remote UE and a relay UE in a PCS connection with the remote UE (such as sidelink reference signal received power (SL-RSRP) or sidelink discovery reference signal received power (SD-RSRP)), a PCS measurement result when the connection establishment failure occurs, a Uu link measurement result when the connection establishment failure occurs;
cause related information: the cause of the connection establishment failure is that the relay UE is in a connected state, and a connection establishment of the remote UE fails.

Subsequently, after the remote UE enters the RRC connected state, the remote UE reports the recorded information to the network-side device.

Since no connection establishment failure occurs to the relay UE in the connected state, the relay UE does not perform recording or reporting.

### Scenario 2: failure of connection establishment

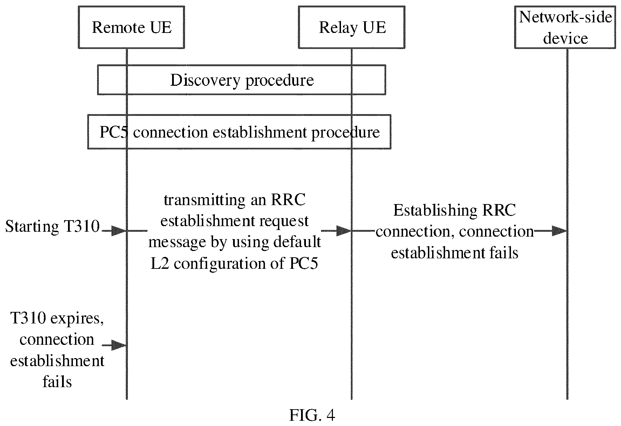

As shown in FIG. 4, a remote UE establishes a PCS connection with a relay UE through a discovery procedure and a PCS connection establishment procedure. The remote UE in an RRC_IDLE (idle) state triggers the connection establishment procedure, and the remote UE starts a timer T300. For an RRC establishment request message received from the remote UE, the relay UE in the non-connected state (RRC_IDLE state or RRC_INACTIVE state) will first establish an RRC connection between the relay UE and the network-side device (i.e., a Uu connection). Since the connection establishment between the relay UE and the network-side device fails, after T300 expires, the remote UE does not receive a connection establishment message from the network side, and the connection establishment of the remote UE fails. Therefore, it may be understood that the cause of the connection establishment failure of the remote UE in this scenario is that the relay UE is in an idle state or an inactive state, and a connection establishment of the relay UE fails.

In this way, in addition to information included in a CEF report in the related art, information recorded by the remote UE when detecting the connection establishment failure further includes the following information:
relevant information of the relay UE: identification information (L2-ID or C-RNTI) of the relay UE for the connection establishment;
relevant information of the remote UE: location information of the remote UE, identification information (L2-ID or C-RNTI) of the remote UE;
identification information of a serving cell: identification information of the serving cell for the connection establishment;
time related information: a duration from when the relay UE is connected to when the connection establishment failure occurs;
measurement related information: a PCS measurement result between the remote UE and a relay UE in a PCS connection with the remote UE (such as SL-RSRP or SD-RSRP), a PCS measurement result when the connection establishment failure occurs, a Uu link measurement result when the connection establishment failure occurs;
cause related information: the cause of the connection establishment failure is that the relay UE is in an idle or inactive state, a connection establishment of the relay UE fails, and a connection establishment of the remote UE fails.

The connection establishment fails when the relay UE establishes a connection between itself and the network device based on the RRC establishment request message from the remote UE. Therefore, in addition to the information included in a connection failure report in related technologies, the relay UE records the following information:
relevant information of the relay UE: identification information (L2-ID or C-RNTI) of the relay UE, and location information of the relay UE;
relevant information of a remote UE: identification information of a remote UE in a PCS connection, which includes identification information of a remote UE that assists in establishing an RRC connection. In a case that the relay UE is in PCS connection with two or more remote UEs simultaneously, identification information of the other remote UEs are reported, and the quantity of the remote UEs in the PCS connection is reported.
measurement related information: a PCS measurement result between the relay UE and a remote UE having the PCS connection with the relay UE, a Uu link measurement result and a PCS measurement result when the connection establishment failure occurs;
cause related information: a cause of the connection establishment is to establish a connection for a remote UE.

Subsequently, after entering an RRC connected state, the relay UE or the remote UE report the respectively recorded information to the network-side device.

### Scenario 3: radio link failure

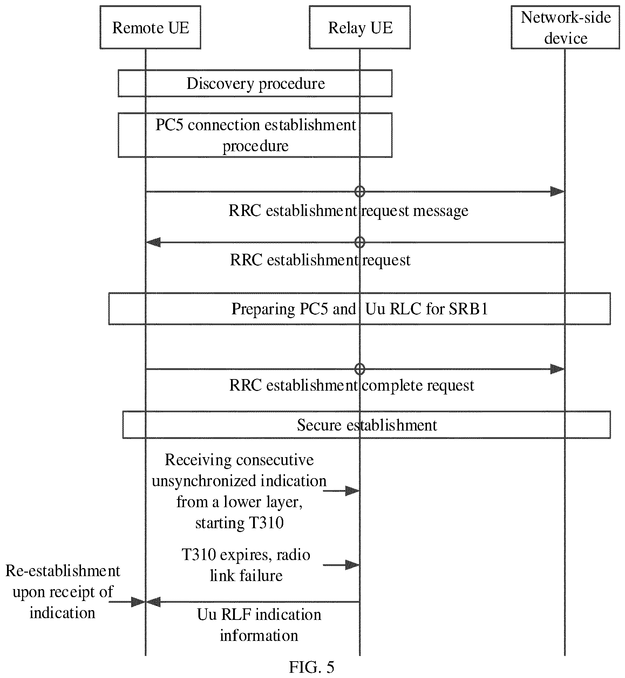

As shown in FIG. 5, after a remote UE is in an RRC connected state (that is, an RRC connection between the remote UE and a network-side device is securely established), the remote UE receives Uu RLF indication information from a relay UE (generated by the relay UE when detecting a Uu RLF), and triggers a radio link failure between the remote UE and the network device. After triggering the RLF, the relay UE may trigger an RRC re-establishment procedure to resume the RRC connection. After triggering the RLF, the remote UE may trigger an RRC re-establishment procedure or a relay UE re-selection procedure, which depends on an implementation of the remote UE. At this time, the remote UE records an RLF report, and because the relay UE itself experiences the RLF, the relay UE also records an RLF report. In addition to the contents recorded after an RLF in the related art, the remote UE and the relay UE also record the following contents.

The record of the remote UE also includes the following information:
relevant information of the relay UE: identification information of a relay UE that detects a Uu RLF; identification information of a relay UE to which the remote UE reverts back after a connection failure or a re-establishment failure; identification information of a relay UE for a re-establishment after a connection failure; identification information of a relay UE with which the remote UE attempts to establish a PCS connection after an RLF occurs to the remote UE (such as: identification information of a relay UE that has a PCS connection with the remote UE before the remote UE enters a connected state, and/or identification information of a relay UE that has not successfully established a PCS connection);
identification information of a serving cell: identification information of a serving cell of a remote UE when detecting an RLF, and identification information of a serving cell of a remote UE that reverts back to a connection after a connection failure or a re-establishment failure;
time related information: a duration elapsing since an RLF is detected, a duration from a time when an RLF of the remote UE is detected to a time when the remote UE establishes a last PCS connection, a duration from the time when the remote UE establishes the last PCS connection to a time when the remote UE enters an RRC connected state, a duration from the time when the RLF of the remote UE is detected to the time when the remote UE enters the RRC connected state;
measurement related information: a Uu link measurement result when an RLF occurs, a PCS measurement result between the remote UE and a relay UE having a PCS connection with the remote UE when the RLF occurs, and a PCS measurement result when the RLF occurs;
type related information: a type of a connection failure (RLF of a remote UE);
cause relevant information: a cause of an RLF (Uu RLF, a cause of Uu radio link failure).

The relay UE records the following information:
relevant information of the relay UE: location information of the relay UE, and identification information (L2-ID or C-RNTI) of the relay UE;
relevant information of a remote UE: identification information of a remote UE in a PCS connection, which includes identification information of a remote UE that assists in establishing an RRC connection. In a case that the relay UE is in PCS connection with two or more remote UEs simultaneously, identification information of the other remote UEs are reported, and the quantity of the remote UEs in the PCS connection is reported;
measurement related information: a Uu link measurement result and a PCS measurement result when an RLF occurs, and a PCS measurement result between the relay UE and a remote UE having the PCS connection with the relay UE.

Subsequently, after entering the RRC connected state, the relay UE or the remote UE report the respectively recorded information to the network-side device.

### Scenario 4: handover failure of remote UE

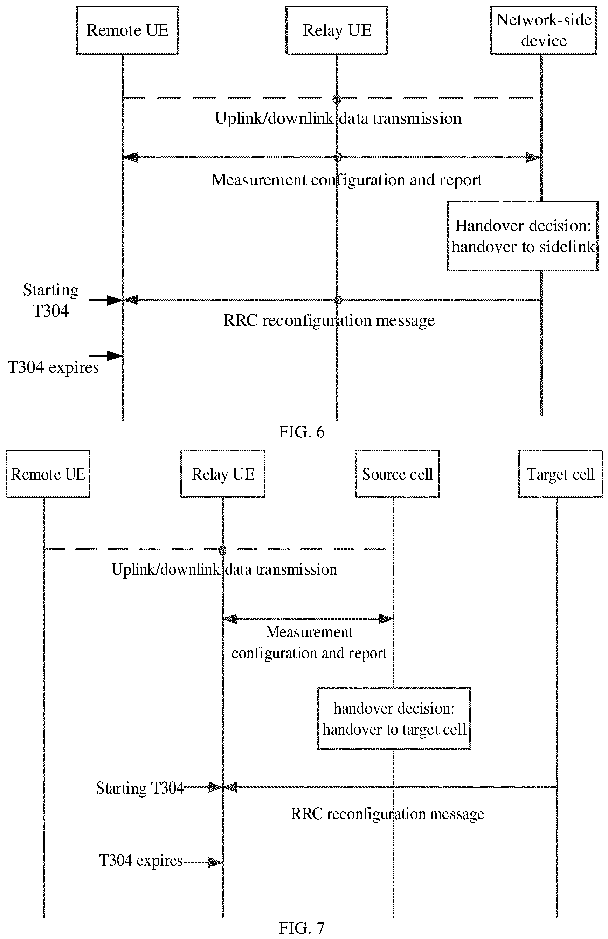

As shown in FIG. 6, a remote UE is in an RRC connected state, and reports a PCS measurement result and an RRM measurement result to the network side; a network-side device makes a handover decision based on the reported contents, determines to handover the remote UE from a PC5-RRC connection to a Uu connection, and transmits a handover command; the remote UE starts a timer T304 after receiving the handover command; the timer T304 of the remote UE expires, and the handover fails if the handover procedure is not completed, and a re-establishment procedure is triggered in response to the handover failure. At this time, the relay UE in this scenario is not subjected to the handover failure, and the relay UE does not perform recording or reporting.

In addition to contents that needs to be recorded with respect to HOF in the related art, the information recorded by the remote UE when the handover of the remote UE fails also includes the following information:
relevant information of a relay UE: identification information of a relay UE before a last handover in case that the connection before the handover is a PCS connection, identification information of a remote UE that is subjected to an HOF, and identification information of a relay UE to which the remote UE reverts back after a handover failure or a re-establishment failure;
identification information of a serving cell: identification information of a source cell in a last handover; identification information of a serving cell of a remote UE before a last handover in case that a connection before the handover is a PCS connection; identification information of a serving cell of a remote UE that is subjected to an HOF; and identification information of a serving cell of a remote UE that reverts back to a connection after a re-establishment failure;
time related information: a duration elapsing since an HOF of a remote UE is detected, a duration from a time when the HOF of the remote UE is detected to a time when the remote UE establishes a last PCS connection, a duration from the time when the remote UE establishes the last PCS connection to a time when the remote UE enters an RRC connected state, a duration from the time when the HOF of the remote UE is detected to the time when the remote UE enters the RRC connected state;
measurement related information: a Uu link measurement result when an HOF occurs, a PCS measurement result between the remote UE and a relay UE having a PCS connection with the remote UE when the HOF occurs, and a PCS measurement result when the HOF occurs.;
type related information: a type of a connection failure (HOF of a remote UE), a type of a handover failure (a handover from PCS connection to direct connection).

Subsequently, after the remote UE enters the RRC connected state, the remote UE reports the recorded information to the network-side device.

### Scenario 5: handover failure of relay UE

As shown in FIG. 7, a relay UE is in an RRC connected state, and reports a PCS measurement result and an RRM measurement result to a network side; a network-side device makes a handover decision based on the reported contents, determines to handover the relay UE to a target cell, and transmits a handover command; the relay UE receives the handover command and starts a timer T304; after T304 expires, the handover fails if the handover procedure is not completed. At this time, the remote UE is not subjected to the handover failure, and does not perform recording or reporting.

In addition to the contents that needs to be recorded with respect to a handover failure in the related art, the information recorded by the relay UE when the handover failure of the relay UE occurs includes the following information:
relevant information of the relay UE: location information of the relay UE; relevant information of a remote UE: identification information of a remote UE in a PCS connection, including identification information of a remote UE that assists in establishing an RRC connection. In a case that the relay UE is in PCS connection with two or more remote UEs simultaneously, identification information of the other remote UEs are reported, and the quantity of the remote UEs in the PCS connection is reported;
measurement related information: a PCS measurement result between the remote UE and a relay UE having the PCS connection with the remote UE, a Uu link measurement result and a PCS measurement result when the handover failure occurs.

Subsequently, after the relay UE enters the RRC connected state, the relay UE reports the recorded information to the network-side device.

### Scenario 6: handover of a remote UE is successful, although a threshold issue occurs

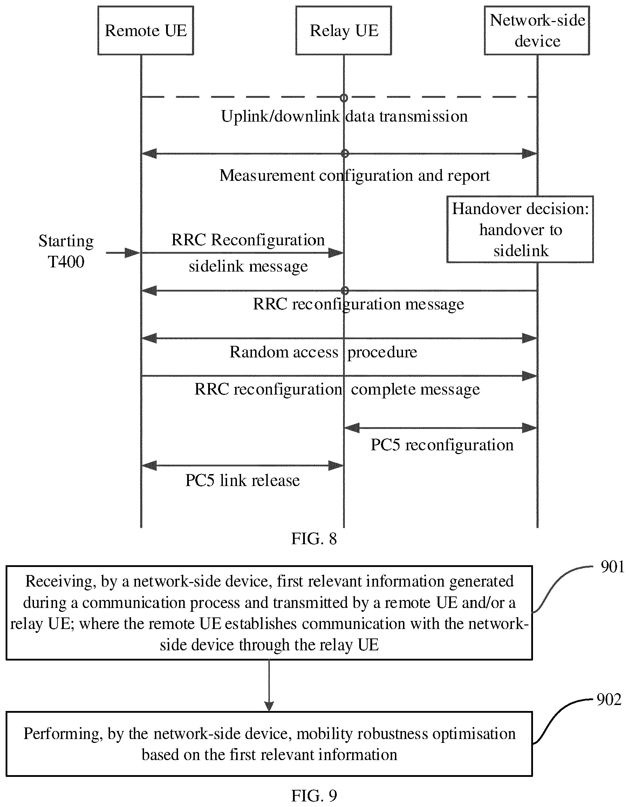

As shown in FIG. 8, the remote UE is in an RRC connected state, and reports a PCS measurement result and an RRM measurement result to a network side; the remote UE transmits an RRC Reconfiguration sidelink message through a PCS connection, and starts a timer T400; the remote UE receives a handover command for instructing the remote UE to handover from one PCS connection to another PCS connection during the on-duration of the timer T400, and a handover of the remote UE is successful. At this time, a PCS link between the relay UE and the remote UE is released, and the relay UE does not need to record and report. Since the received handover command terminates the RRC reconfiguration sidelink procedure during the on-duration of the timer T400, and the terminated RRC Reconfiguration sidelink may fail to cause PCS RLF, thus, the remote UE records the above threshold issue in a handover success report. In addition to information in the successful handover report in the related art, the information recorded by the remote UE further includes the following information:
relevant information of a relay UE: identification information of a source relay UE in the handover, and identification information of a target relay UE in the handover;
measurement related information: a PCS measurement result between the remote UE and a source relay UE in the handover: a PCS measurement result between the remote UE and a target relay UE in the handover, and a PCS measurement result of the remote UE;
a condition for triggering a successful handover report: a trigger condition is that the T400 timer is greater than a timer threshold and has not expired.

It should be noted that, the network-side device in the embodiments of this application may be, but not limited to: a base station, and a central unit (CU).

As shown in FIG. 9, an information receiving method in an embodiment of this application includes:
step 901, receiving, by a network-side device, first relevant information generated during a communication process and transmitted by a remote UE and/or a relay UE; where the remote UE establishes communication with the network-side device through the relay UE; and
step 902, performing, by the network-side device, mobility robustness optimisation based on the first relevant information.

The network-side device receives the first relevant information through step 901, and can perform mobility robustness optimisation in a multi-hop network scenario.

Optionally, the first relevant information includes one or more of the following:
information of the relay UE;
information of the remote UE;
identification information of a serving cell;
time information;
measurement information;
cause information;
type information corresponding to the communication process;
a condition for triggering a successful handover report.

It should be noted that the method in this embodiment is implemented in cooperation with the above information transmitting method, and implementation manners of the above method embodiments are applicable to this embodiment, which can also achieve the same technical effect.

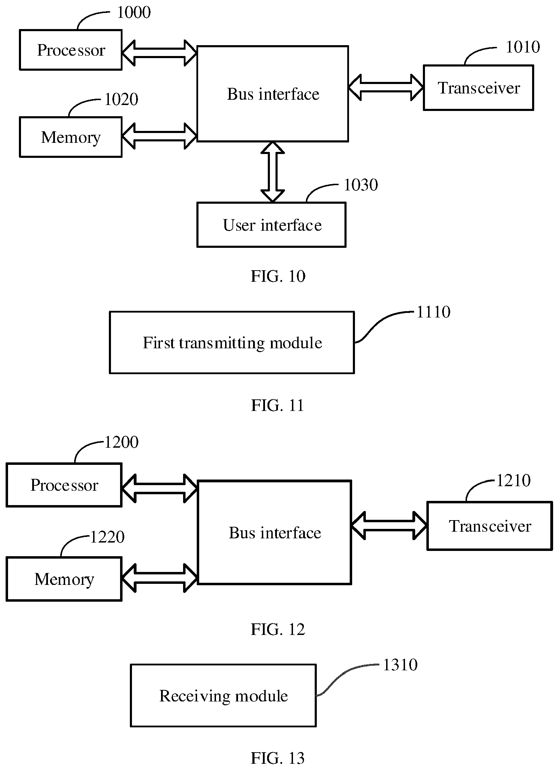

As shown in FIG. 10, an embodiment of this application further provides a transmission processing apparatus, including: a memory 1020, a transceiver 1010 and a processor 1000.

The memory 1020 is configured to store program instructions; the transceiver 1010 is configured to send and receive data under the control of the processor 1000; the processor 1000 is configured to read the program instructions in the memory 1020, and the transceiver 1010 is configured to perform the following operations:
obtaining first relevant information generated during a communication process; and transmitting the first relevant information to a network-side device, where the communication process is a communication process established by a remote user equipment (UE) with the network-side device through a relay UE; where the first relevant information includes one or more of the following:
information of the relay UE;
information of the remote UE;
identification information of a serving cell;
time information;
measurement information;
cause information;
type information corresponding to the communication process;
a condition for triggering a successful handover report.

Optionally, the communication process includes one or more of the following:
a connection establishment procedure;
a connection resumption procedure;
a radio link failure procedure;
a handover procedure.

Optionally, the information of the relay UE includes: identification information of the relay UE; and/or, a correspondence between the identification information and a specified event; and/or, location information of the relay UE;
where the specified event includes at least one of the following events:
a connection establishment;
a radio link failure (RLF) being detected;
a handover failure (HOF) being detected;
a handover;
reverting back to a connection after a connection failure or a re-establishment failure;
a re-establishment after a connection failure;
attempting to establish a PCS connection after an RLF occurs to the remote UE, where the RLF includes a PCS RLF or a Uu RLF;
attempting to establish a PCS connection after an HOF occurs to the remote UE.

Optionally, the information of the remote UE includes one or more of the following:
identification information of the remote UE, including identification information of a remote UE that establishes a PCS connection with the relay UE;
location information of the remote UE;
the quantity of remote UEs that establish a PCS connection with the relay UE.

Optionally, the time information includes one or more of the following:
a duration from when a PCS connection is established to when the communication process occurs;
a duration from a handover related time moment to when an RLF occurs;
a duration elapsing since an RLF is detected;
a duration from when an RLF occurs to when a PCS connection is established;
a duration elapsing since an HOF is detected;
a duration from when an HOF occurs to when a PCS connection is established;
a duration from when a PCS connection is established to when a radio resource control (RRC) connected state is entered;
a duration from when an RLF occurs to when an RRC connected state is entered;
a duration from when an HOF occurs to when an RRC connected state is entered;
where the RLF includes a PCS RLF or a Uu RLF.

Optionally, the measurement information includes one or more of the following:
a PCS measurement result of the remote UE;
a measurement result of a PCS connection between the remote UE and the relay UE that establishes the PCS connection with the remote UE;
a Uu link measurement result of the remote UE;
a PCS measurement result of the relay UE;
a measurement result of a PCS connection between the relay UE and the remote UE that establishes the PCS connection with the relay UE;
a Uu link measurement result of the relay UE.

Optionally, the cause information includes one or more of the following:
a cause of a connection establishment failure, where a connection establishment includes that the relay UE assists the remote UE in establishing a connection;
a cause of a connection resumption failure;
a cause of a radio link failure, where a radio link includes a PCS link or a Uu link;
a cause of a connection establishment, where the cause of the connection establishment is to establish a connection for the remote UE.

Optionally, in case that the radio link is the PCS link, the cause of the radio link failure includes one or more of the following:
a T400 timer expires;
the number of transmissions of a sidelink radio link control (RLC) entity is greater than or equal to a first transmission number;
the number of consecutive hybrid automatic repeat request (HARQ) discontinuous transmissions (DTXs) of a medium access control (MAC) entity is greater than or equal to a second transmission number;
an integrity check of a sidelink signaling radio bearer associated with a sidelink packet data convergence protocol (PDCP) entity fails.

Optionally, the cause of the connection establishment failure includes one or more of the following:
the relay UE is in a connected state, and a connection establishment of the remote UE fails;
the relay UE is in an idle or inactive state, a connection establishment of the relay UE fails, and a connection establishment of the remote UE fails.

Optionally, the cause of the connection resumption failure includes one or more of the following:
the relay UE is in a connected state, and a connection resumption of the remote UE fails;
the relay UE is in an idle or inactive state, a connection resumption of the relay UE fails, and a connection resumption of the remote UE fails.

Optionally, the type information corresponding to the communication process includes one or more of the following:
a type of a connection failure, where the type of the connection failure includes one or more of: an RLF of the remote UE, an HOF of the remote UE;
a handover type, where the handover type includes one or more of: a handover from a direct connection to a PCS connection, a handover from a PCS connection to a direct connection, and a handover from one PCS connection to another PCS connection;
a type of a handover failure, where the type of the handover failure includes one or more of: a failure of a handover from a direct connection to a PCS connection, a failure of a handover from a PCS connection to a direct connection, and a failure of a handover from one PCS connection to another PCS connection.

Optionally, the condition for triggering the successful handover report includes one or more of the following:
T400 timer is greater than a timer threshold and does not expire;
the number of transmissions of a sidelink RLC entity is greater than or equal to a first transmission threshold, and less than a first transmission number;
the number of consecutive HARQ DTXs of an MAC entity is greater than or equal to a second transmission threshold, and less than a second transmission number.

Optionally, the identification information of the serving cell includes one or more of the following:
identification information of a source cell in a last handover;
identification information of a serving cell of a remote UE before a last handover in case that a connection before the handover is a PCS connection;
identification information of a serving cell of a remote UE that detects an RLF;
identification information of a serving cell of a remote UE that detects an HOF;
identification information of a serving cell of a remote UE that reverts back to a connection after a connection failure;
identification information of a serving cell of a remote UE that reverts back to a connection after a re-establishment failure.

Optionally, the identification information includes one or more of the following:
cell-radio network temporary identifier (C-RNTI);
an identifier of layer 2.

An embodiment of this application provides an information transmitting method and an information transmitting apparatus. The method and the apparatus are based on the same creative concept. Since principles of solving problems of the method and the apparatus are similar, for implementation of one of the apparatus and the method, reference can be made to implementation of the other, a repeated description thereof is omitted herein.

In FIG. 10, a bus architecture may include any quantity of interconnected buses and bridges, and connects various circuits including one or more processors represented by the processor 1000 and a memory represented by the memory 1020. The bus architecture may also connect various other circuits such as peripherals, voltage regulators and power management circuits, which is well known in the art. Therefore, a detailed description thereof is omitted herein. A bus interface provides an interface. The transceiver 1010 may be multiple elements, i.e., a transmitter and a receiver, to allow for communication with various other apparatuses on the transmission media. These transmission media include wireless channel, wired channel, optic fiber or the like. For different user equipment, the user interface 1030 may be an interface capable of externally or internally connecting a required device, and the connected device includes, but not limited to, a keypad, a display, a speaker, a microphone, a joystick and the like.

The processor 1000 is responsible for managing the bus architecture and general processing, and the memory 1020 may store data used by the processor 1000 when performing operations.

Optionally, the processor 1000 may be a central processing unit (CPU), an application specific integrated circuit (ASIC), a field-programmable gate array (FPGA), or a complex programmable logic device (CPLD). The processor 1000 may also adopt a multi-core architecture.

The processor 1000 is configured to execute any one of the methods provided in the embodiments of this application according to the obtained executable instructions by calling the program instructions stored in the memory. The processor 1000 and the memory 1020 may also be physically separated.

The apparatus in the embodiment of this application obtains first relevant information in a target procedure for a relay communication, the first relevant information includes at least one of the following: relevant information of a relay UE, relevant information of a remote UE, identification information of a serving cell, time related information, measurement related information, cause related information, type related information, and a condition for triggering a successful handover report. The apparatus can send the first relevant information to a network-side device, to enable the network-side device to perform mobile robustness optimisation in a multi-hop network scenario based on the first relevant information.

It should be noted that the above apparatus provided in the embodiment of this application can implement all the method steps implemented in the above embodiments of the method performed by the first UE, and can achieve the same technical effect. Therefore, the description and the beneficial effect of this embodiment that are the same as the method embodiments will not be repeated here in detail.

As shown in FIG. 11, an embodiment of this application further provides an information transmitting apparatus, including:
a first transmitting module 1110, configured to obtain first relevant information generated during a communication process; and transmit the first relevant information to a network-side device, where the communication process is a communication process established by a remote UE with a network-side device through a relay UE; where the first relevant information includes one or more of the following:
information of the relay UE;
information of the remote UE;
identification information of a serving cell;
time information;
measurement information;
cause information;
type information corresponding to the communication process;
a condition for triggering a successful handover report.

Optionally, the communication process includes one or more of the following:
a connection establishment procedure;
a connection resumption procedure;
a radio link failure procedure;
a handover procedure.

Optionally, the information of the relay UE includes: identification information of the relay UE; and/or, a correspondence between the identification information and a specified event; and/or, location information of the relay UE; where the specified event includes at least one of the following events:
a connection establishment;
a radio link failure (RLF) being detected;
a handover failure (HOF) being detected;
a handover;
reverting back to a connection after a connection failure or a re-establishment failure;
a re-establishment after a connection failure;
attempting to establish a PCS connection after an RLF occurs to the remote UE, where the RLF includes a PCS RLF or a Uu RLF;
attempting to establish a PCS connection after an HOF occurs to the remote UE.

Optionally, the information of the remote UE includes one or more of the following:
identification information of the remote UE, including identification information of a remote UE that establishes a PCS connection with the relay UE;
location information of the remote UE;
the quantity of remote UEs that establish a PCS connection with the relay UE.

Optionally, the time information includes one or more of the following:
a duration from when a PCS connection is established to when the communication process occurs;
a duration from a handover related time moment to when an RLF occurs;
a duration elapsing since an RLF is detected;
a duration from when an RLF occurs to when a PCS connection is established;
a duration elapsing since an HOF is detected;
a duration from when an HOF occurs to when a PCS connection is established;
a duration from when a PCS connection is established to when a radio resource control (RRC) connected state is entered;
a duration from when an RLF occurs to when an RRC connected state is entered;
a duration from when an HOF occurs to when an RRC connected state is entered;
where the RLF includes a PCS RLF or a Uu RLF.

Optionally, the measurement information includes one or more of the following:
a PCS measurement result of the remote UE;
a measurement result of a PCS connection between the remote UE and the relay UE that establishes the PCS connection with the remote UE;
a Uu link measurement result of the remote UE;
a PCS measurement result of the relay UE;
a measurement result of a PCS connection between the relay UE and the remote UE that establishes the PCS connection with the relay UE;
a Uu link measurement result of the relay UE.

Optionally, the cause information includes one or more of the following:
a cause of a connection establishment failure, where a connection establishment includes that the relay UE assists the remote UE in establishing a connection;
a cause of a connection resumption failure;
a cause of a radio link failure, where a radio link includes a PCS link or a Uu link;
a cause of a connection establishment, where the cause of the connection establishment is to establish a connection for the remote UE.

Optionally, in case that the radio link is the PCS link, the cause of the radio link failure includes one or more of the following:
a T400 timer expires;
the number of transmissions of a sidelink radio link control (RLC) entity is greater than or equal to a first transmission number;
the number of consecutive hybrid automatic repeat request (HARQ) discontinuous transmissions (DTXs) of a medium access control (MAC) entity is greater than or equal to a second transmission number;
an integrity check of a sidelink signaling radio bearer associated with a sidelink packet data convergence protocol (PDCP) entity fails.

Optionally, the cause of the connection establishment failure includes one or more of the following:
the relay UE is in a connected state, and a connection establishment of the remote UE fails;
the relay UE is in an idle or inactive state, a connection establishment of the relay UE fails, and a connection establishment of the remote UE fails.

Optionally, the cause of the connection resumption failure includes one or more of the following:
the relay UE is in a connected state, and a connection resumption of the remote UE fails;
the relay UE is in an idle or inactive state, a connection resumption of the relay UE fails, and a connection resumption of the remote UE fails.

Optionally, the type information corresponding to the communication process includes one or more of the following:
a type of a connection failure, where the type of the connection failure includes one or more of: an RLF of the remote UE, an HOF of the remote UE;
a handover type, where the handover type includes one or more of: a handover from a direct connection to a PCS connection, a handover from a PCS connection to a direct connection, and a handover from one PCS connection to another PCS connection;
a type of a handover failure, where the type of the handover failure includes one or more of: a failure of a handover from a direct connection to a PCS connection, a failure of a handover from a PCS connection to a direct connection, and a failure of a handover from one PCS connection to another PCS connection.

Optionally, the condition for triggering the successful handover report includes one or more of the following:
the T400 timer is greater than a timer threshold and does not expire;
the number of transmissions of a sidelink RLC entity is greater than or equal to a first transmission threshold, and less than a first transmission number;
the number of consecutive HARQ DTXs of an MAC entity is greater than or equal to a second transmission threshold, and less than a second transmission number.

Optionally, the identification information of the serving cell includes one or more of the following:
identification information of a source cell in a last handover;
identification information of a serving cell of a remote UE before a last handover in case that a connection before the handover is a PCS connection;
identification information of a serving cell of a remote UE that detects an RLF;
identification information of a serving cell of a remote UE that detects an HOF;
identification information of a serving cell of a remote UE that reverts back to a connection after a connection failure;
identification information of a serving cell of a remote UE that reverts back to a connection after a re-establishment failure.

Optionally, the identification information includes one or more of the following:
cell-radio network temporary identifier (C-RNTI);
an identifier of layer 2.

In an application scenario where a remote UE establishes a communication with a network-side device through a relay UE, the apparatus according to the embodiment of this application obtains first relevant information generated in the communication process, where the first relevant information includes at least one of the following: information of the relay UE, information of the remote UE, identification information of a serving cell, time information, measurement information, cause information, type information corresponding to the communication process, a condition for triggering a successful handover report, and sends the first relevant information to the network-side device. Each of different UEs collects corresponding information according to a relevant operation executed by the UE in the communications, and records a correspondence between the information and the executed operation. Thus, the network-side device can identify performance of a multi-hop network after receiving the first relevant information, and then can perform mobile robustness optimisation of the multi-hop network based on the first relevant information.

It should be noted that the above apparatus provided in the embodiment of this application can implement all the method steps implemented in the above embodiments of the information transmitting method, and can achieve the same technical effect. Therefore, the description and beneficial effect of this embodiment that are the same as the method embodiments will not be repeated here in detail.

In some embodiments of this application, a processor-readable storage medium is provided, the processor-readable storage medium stores program instructions, and the program instructions are configured to cause a processor to execute the transmission processing method performed by the first UE.

The program instructions are executed by the processor to implement all the implementation manners in the above-mentioned method embodiments shown in FIG. 2. To avoid repetition, details are not described here.

As shown in FIG. 12, an embodiment of this application further provides a transmission processing apparatus, including: a memory 1220, a transceiver 1210 and a processor 1200. The memory 1220 is configured to store program instructions; the processor 1200 is configured to read the program instructions in the memory 1220; the transceiver 1210 is configured to send and receive data under the control of the processor 1200, and perform the following operations: receiving first relevant information generated during a communication process and transmitted by a remote UE and/or a relay UE; where the remote UE establishes communication with a network-side device through the relay UE.

After receiving the first relevant information generated during the communication and transmitted by the remote UE and/or the relay UE, the operation further includes: performing mobility robustness optimisation based on the first relevant information.

Optionally, the first relevant information includes one or more of the following:
information of the relay UE;
information of the remote UE;
identification information of a serving cell;
time information;
measurement information;
cause information;
type information corresponding to the communication process;
a condition for triggering a successful handover report.

In FIG. 12, a bus architecture may include any quantity of interconnected buses and bridges, and connects various circuits including one or more processors represented by the processor 1200 and a memory represented by the memory 1220. The bus architecture may also connect various other circuits such as peripherals, voltage regulators and power management circuits, which is well known in the art. Therefore, a detailed description thereof is omitted herein. A bus interface provides an interface. The transceiver 1210 may be multiple elements, i.e., a transmitter and a receiver, to allow for communication with various other apparatuses on the transmission media. These transmission media include wireless channel, wired channel, optic fiber or the like. The processor 1200 is responsible for managing the bus architecture and general processing, and the memory 1220 may store data used by the processor 1210 when performing operations.

The processor 1200 may be a central processing unit (CPU), an application specific integrated circuit (ASIC), a field-programmable gate array (FPGA) or a complex programmable logic device (CPLD). The processor may also adopt a multi-core architecture.

It should be noted that the above apparatus provided in the embodiment of this application can implement all the method steps implemented in the above embodiments of the information receiving method performed by the network-side device, and can achieve the same technical effect. Therefore, the description and the beneficial effect of this embodiment that are the same as the method embodiments will not be repeated here in detail.

As shown in FIG. 13, an embodiment of this application further provides an information receiving apparatus, including:
a receiving module 1310, configured to receive first relevant information generated during a communication process and transmitted by a remote UE and/or a relay UE; where the remote UE establishes communication with a network-side device through the relay UE.

Optionally, the first relevant information includes one or more of the following:
information of the relay UE;
information of the remote UE;
identification information of a serving cell;
time information;
measurement information;
cause information;
type information corresponding to the communication process;
a condition for triggering a successful handover report.

The apparatus in the embodiment of this application receives first relevant information, and can perform mobile robustness optimisation in a multi-hop network scenario. The apparatus adopts the above information receiving method executed by the network-side device, and the implementations of the above method embodiments are applicable to the apparatus, which can also achieve the same technical effect.

In some embodiments of this application, a processor-readable storage medium is further provided, the processor-readable storage medium stores program instructions, and the program instructions are configured to cause a processor to execute the transmission receiving method performed by a network-side device.

When the program instructions are executed by the processor, all the implementation manners in the above-mentioned method embodiments shown in FIG. 9 can be realized. To avoid repetition, details are not described here.

It should be noted that the division of units in the embodiments of the present application is illustrative, and is only a logical function division, and there may be another division manner in actual implementation. In addition, the functional units in various embodiments of the present application may be integrated into one processing unit, or each unit may exist separately physically, or two or more units may be integrated into one unit. The above-mentioned integrated units may be implemented in the form of hardware or in the form of software functional units.

If the integrated unit is implemented in the form of a software function unit and sold or used as an independent product, it can be stored in a processor-readable storage medium. Based on such an understanding, essential parts, or parts contributing to the related art, of the technical solution of the present application, or all or a part of the technical solution may be implemented in a form of a software product. The computer software product is stored in a storage medium, and includes several instructions to enable a computer device (which may be a personal computer, a server, or a network device, etc.) or a processor to execute part or all of the steps of the methods described in the various embodiments of the present application. The aforementioned storage media include: universal serial bus (USB) flash drive, removable hard disk, read-only memory (ROM), random access memory (RAM), magnetic disk, optical disc or other media that can store program codes.

It should be noted that the above apparatus provided in the embodiment of this application can implement all the method steps implemented in the above method embodiments, and can achieve the same technical effect. Therefore, the description and the beneficial effect of this embodiment that are the same as the method embodiments will not be repeated here in detail.

It is noted that the technical solution according to embodiments of the present application may be applied to various systems, particularly to a 5G system. For example, an applicable system may be a global system of mobile communication (GSM) system, a code division multiple access (CDMA) system, a wideband code division multiple access (WCDMA) system, a general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, and a 5G New Radio (NR) system. Each of the various systems includes a terminal and a network device. The systems may further include a core network portion, such as an evolved packet system (EPS), or a 5G system (SGS).

The UE involved in the embodiments of the present application may be a device that provides voice and/or data connectivity to a user, a handheld device with a radio connection function, or other processing devices connected to a radio modem or the like. In different systems, the names of terminal may be different. For example, in a 5G system, a terminal may be referred to as user equipment (UE). A wireless terminal can communicate with one or more core networks (CNs) via a radio access network (RAN), and the wireless terminal may be a mobile terminal, such as a mobile phone (or referred to as "cellular" phone) and a computer with a mobile terminal, such as a portable, pocket-sized, hand-held, computer built-in or vehicle-mounted mobile apparatus, which exchange voice and/or data with the radio access network. For example, personal communication service (PCS) phones, cordless phones, session initiated protocol (SIP) phones, wireless local loop (WLL) stations, personal digital assistant (PDA) and other devices. The wireless terminal may also be referred to as a system, subscriber unit, subscriber station, mobile station, mobile, remote station, access point, remote terminal, access terminal, user terminal, user agent and user device, which are not limited in the embodiments of the present application.

The network device involved in the embodiments of the present application may be a base station. The base station may include multiple cells that provide services to terminals. Depending on the specific application scenario, the base station may be called access point, or may be a device in the access network that communicates over an air interface with wireless terminal devices through one or more sectors, or may be called another name. The network device may be used for converting the received radio frames into Internet protocol (IP) packets or vice versa, and serves as a router between the wireless terminals and the rest of the access network. The rest of the access network may include an IP communication network. The network device may also coordinate the attribute management of the air interface. For example, the network device involved in the embodiments of the present application may be a base transceiver station (BTS) in the global system for mobile communications (GSM) or code division multiple access (CDMA), a NodeB in the wide-band code division multiple access (WCDMA), an evolved Node B (eNB or e-NodeB) in long term evolution (LTE) system, a 5G base station (gNB) in 5G network architecture (next generation system), a home evolved Node B (HeNB), a relay node, a femto, a pico, or the like, which is not limited herein. In some network architectures, the network device may include a centralized unit (CU) node and a distributed unit (DU) node, which may be geographically separated.

The network device and the terminal may each perform multi-input multi-output (MIMO) transmission with each other by using one or more antennas. The MIMO transmission may be single user MIMO (SU-MIMO) or multiple user MIMO (MU-MIMO). According to the configuration and quantity of antenna combinations, the MIMO transmission may be 2 dimensional-MIMO (2D-MIMO), 3 dimensional-MIMO (3D-MIMO), full dimensional-MIMO (FD-MIMO) or massive-MIMO (massive-MIMO), and may be diversity transmission, pre-coded transmission, beam forming transmission, or the like.

Those skilled in the art should appreciate that the embodiments of the present application may be provided as a method, a system, or a computer program product. Therefore, the present application may take the form of complete hardware embodiments, complete software embodiments, or embodiments combining software and hardware. Moreover, the present application may take the form of a computer program product implemented on one or more computer usable storage media (including but not limited to magnetic disk storage, optical storage, etc.) including a computer usable program code.

The present application is described with reference to the flow chart and/or the block diagram of the method, device (system), and computer program product according to the embodiments of the present application. It should be appreciated that each of processes and/or blocks in a flow chart and/or block diagram, and a combination of the processes and/or blocks in the flow chart and/or block diagram may be implemented by computer executable instructions. These computer executable instructions may be provided to a processor of a general-purpose computer, a specialized computer, an embedded processing device, or other programmable data processing devices to generate a machine, such that the instructions, which are executed via the processor of the computer or other programmable data processing device, create means for implementing the functions specified in the flow diagram flow or flows and/or block diagram block or blocks.

These processor executable instructions may also be stored in processor-readable memory that may guide computers or other programmable data processing devices to work in a specific way, causing the instructions stored in the processor readable memory to generate a manufacturing product including instruction devices that implement the functions specified in the flow diagram flow or flows and/or block diagram block or blocks.

These processor executable instructions may also be loaded into a computer or other programmable data processing device, enabling a series of operational steps to be performed on the computer or other programmable device to generate computer-implemented processing, such that the instructions which are executed on the computer or other programmable device provide steps for implementing the functions specified in the flow diagram flow or flows and/or block diagram block or blocks.

Apparently, a person of ordinary skills in the art can make various modifications and variations to this application without departing from the spirit and scope of the present disclosure. In this way, if these modifications and variations of the present application fall within the scope of the claims and their equivalent technologies, the present application also intends to include these modifications and variations.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, the determination module may be a separate processing element, or may be integrated into a certain chip of the above device, or, may be stored in the memory of the above device in the form of program code which is called and executed by a certain processing element of the above device to perform the functions of the determination module. Other modules have similar implementations. In addition, all or part of these modules may be integrated together, or may be implemented independently. The processing element mentioned here may be an integrated circuit with signal processing capability. In the implementation process, the various steps of the above method or the above various modules may be implemented by an integrated logic circuit in hardware form in elements of a processor or instructions in the form of software.

For example, the various modules, units, subunits or submodules may be one or more integrated circuits configured to implement the above methods, such as one or more application specific integrated circuits (ASIC), or one or more microprocessors (digital signal processors, DSPs), or one or more field programmable gate arrays (FPGAs). As another example, when a module described above is implemented in the form of program codes called by a processing element, the processing element may be a general purpose processor, such as a central processing unit (CPU) or other processors that may call program codes. As another example, these modules may be integrated together and implemented as a system-on-a-chip (SOC).

Terms such as "first" and "second" in the specification and the claims of the present application are used for distinguishing similar objects and are not necessarily used for describing a specific order or sequence. It should be understood that the terms used in this way may be interchanged under appropriate circumstances, so that the embodiments of this application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent in the process, method, product, or device. Moreover, the term "and/or" used in the specification and the claims indicates at least one of connected objects, for example, A and/or B and/or C means 7 situations including: A alone, B alone, C alone, both A and B, both B and C, both A and C, and all of A, B and C. Similarly, the use of "at least one of A and B" in this specification and claims should be understood as "A alone, B alone, or both A and B".

The embodiments of the present disclosure are described above with reference to the accompanying drawings. However, the present disclosure is not limited to the foregoing specific implementations. The foregoing specific implementations are merely illustrative rather than limitative. In light of the teachings of the present disclosure, a person of ordinary skill in the art may further make various forms without departing from the spirit of the present disclosure and the scope of the claims, and these forms all fall within the scope of the present disclosure.

## Claims

1. An information transmitting method, comprising:
obtaining first relevant information generated during a communication process; and transmitting the first relevant information to a network-side device, wherein the communication process comprises a process in which a remote user equipment (UE) communicates with the network-side device through a relay UE;
wherein the first relevant information comprises one or more of the following:
information of the relay UE;
information of the remote UE;
identification information of a serving cell;
time information;
measurement information;
cause information;
type information corresponding to the communication process;
a condition for triggering a successful handover report.

2. The information transmitting method according to claim 1, wherein the communication process comprises one or more of the following:
a connection establishment procedure;
a connection resumption procedure;
a radio link failure procedure;
a handover procedure.

3. The information transmitting method according to claim 1, wherein the information of the relay UE comprises: identification information of the relay UE; and/or, a correspondence between the identification information and a specified event; and/or, location information of the relay UE;
wherein the specified event comprises at least one of the following events:
a connection establishment;
a radio link failure (RLF) being detected;
a handover failure (HOF) being detected;
a handover;
reverting back to a connection after a connection failure or a re-establishment failure;
a re-establishment after a connection failure;
attempting to establish a PCS connection after an RLF occurs to the remote UE, where the RLF comprises a PCS RLF or a Uu RLF;
attempting to establish a PCS connection after an HOF occurs to the remote UE.

4. The information transmitting method according to claim 1, wherein the information of the remote UE comprises one or more of the following:
identification information of the remote UE, comprising identification information of a remote UE that establishes a PCS connection with the relay UE;
location information of the remote UE;
a quantity of remote UEs that establish a PCS connection with the relay UE.

5. The information transmitting method according to claim 1, wherein the time information comprises one or more of the following:
a duration from when a PCS connection is established to when the communication process occurs;
a duration from a handover related time moment to when an RLF occurs;
a duration elapsing since an RLF is detected;
a duration from when an RLF occurs to when a PCS connection is established;
a duration elapsing since an HOF is detected;
a duration from when an HOF occurs to when a PCS connection is established;
a duration from when a PCS connection is established to when a radio resource control (RRC) connected state is entered;
a duration from when an RLF occurs to when an RRC connected state is entered;
a duration from when an HOF occurs to when an RRC connected state is entered;
wherein the RLF comprises a PCS RLF or a Uu RLF.

6. The information transmitting method according to claim 1, wherein the measurement information comprises one or more of the following:
a PCS measurement result of the remote UE;
a measurement result of a PCS connection between the remote UE and the relay UE that establishes the PCS connection with the remote UE;
a Uu link measurement result of the remote UE;
a PCS measurement result of the relay UE;
a measurement result of a PCS connection between the relay UE and the remote UE that establishes the PCS connection with the relay UE;
a Uu link measurement result of the relay UE.

7. The information transmitting method according to claim 1, wherein the cause information comprises one or more of the following:
a cause of a connection establishment failure, wherein a connection establishment comprises that the relay UE assists the remote UE in establishing a connection;
a cause of a connection resumption failure;
a cause of a radio link failure, wherein a radio link comprises a PCS link or a Uu link;
a cause of a connection establishment, wherein the cause of the connection establishment is to establish a connection for the remote UE.

8. The information transmitting method according to claim 7, wherein in case that the radio link is the PCS link, the cause of the radio link failure comprises one or more of the following:
a T400 timer expires;
the number of transmissions of a sidelink radio link control (RLC) entity is greater than or equal to a first transmission number;
the number of consecutive hybrid automatic repeat request (HARQ) discontinuous transmissions (DTXs) of a medium access control (MAC) entity is greater than or equal to a second transmission number;
an integrity check of a sidelink signaling radio bearer associated with a sidelink packet data convergence protocol (PDCP) entity fails.

9. The information transmitting method according to claim 7, wherein the cause of the connection establishment failure comprises one or more of the following:
the relay UE is in a connected state, and a connection establishment of the remote UE fails;
the relay UE is in an idle or inactive state, a connection establishment of the relay UE fails, and a connection establishment of the remote UE fails.

10. The information transmitting method according to claim 7, wherein the cause of the connection resumption failure comprises one or more of the following:
the relay UE is in a connected state, and a connection resumption of the remote UE fails;
the relay UE is in an idle or inactive state, a connection resumption of the relay UE fails, and a connection resumption of the remote UE fails.

11. The information transmitting method according to claim 1, wherein the type information corresponding to the communication process comprises one or more of the following:
a type of a connection failure, wherein the type of the connection failure comprises one or more of: an RLF of the remote UE, an HOF of the remote UE;
a handover type, wherein the handover type comprises one or more of: a handover from a direct connection to a PCS connection, a handover from a PCS connection to a direct connection, and a handover from one PCS connection to another PCS connection;
a type of a handover failure, wherein the type of the handover failure comprises one or more of: a failure of a handover from a direct connection to a PCS connection, a failure of a handover from a PCS connection to a direct connection, and a failure of a handover from one PCS connection to another PCS connection.

12. The information transmitting method according to claim 1, wherein the condition for triggering the successful handover report comprises one or more of the following:
T400 timer is greater than a timer threshold and does not expire;
the number of transmissions of a sidelink RLC entity is greater than or equal to a first transmission threshold, and less than a first transmission number;
the number of consecutive HARQ DTXs of an MAC entity is greater than or equal to a second transmission threshold, and less than a second transmission number.

13. The information transmitting method according to claim 1, wherein the identification information of the serving cell comprises one or more of the following:
identification information of a source cell in a last handover;
identification information of a serving cell of a remote UE before a last handover in case that a connection before the handover is a PCS connection;
identification information of a serving cell of a remote UE that detects an RLF;
identification information of a serving cell of a remote UE that detects an HOF;
identification information of a serving cell of a remote UE that reverts back to a connection after a connection failure;
identification information of a serving cell of a remote UE that reverts back to a connection after a re-establishment failure.

14. The information transmitting method according to claim 3 or 4, wherein the identification information comprises one or more of the following:
cell-radio network temporary identifier (C-RNTI);
an identifier of layer 2.

15. An information transmitting apparatus, comprising a memory, a transceiver and a processor,
wherein the memory is configured to store program instructions; the transceiver is configured to transmit and receive data under control of the processor; and the processor is configured to read the program instructions from the memory; the transceiver is configured to:
obtain first relevant information generated during a communication process; and transmit the first relevant information to a network-side device, wherein the communication process comprises a process in which a remote UE communicates with the network-side device through a relay UE;
wherein the first relevant information comprises one or more of the following:
information of the relay UE;
information of the remote UE;
identification information of a serving cell;
time information;
measurement information;
cause information;
type information corresponding to the communication process;
a condition for triggering a successful handover report.

16. A transmission processing apparatus, comprising:
a first transmitting module, configured to obtain first relevant information generated during a communication process, and transmit the first relevant information to a network-side device,
wherein the communication process comprises a process in which a remote UE communicates with the network-side device through a relay UE; the first relevant information comprises one or more of the following:
information of the relay UE;
information of the remote UE;
identification information of a serving cell;
time information;
measurement information;
cause information;
type information corresponding to the communication process;
a condition for triggering a successful handover report.

17. A processor readable storage medium, wherein the processor readable storage medium stores a computer program, and the computer program is configured to cause a processor to execute the information transmitting method according to any one of claims 1 to 14.
